# EUROPEAN PATENT APPLICATION

(11) **EP 4 804 461 A1**
(43) Date of publication of application: **09.09.2026**
(21) Application number: 25223033.9
(22) Date of filing: 12.12.2025
(51) Int. Cl.: H04L 9/40

(54) **CREDENTIAL ADJUSTMENT SYSTEM AND CREDENTIAL ADJUSTMENT METHOD**

(30) Priority: 07.03.2025 JP 2025036565
(71) Applicant: Hitachi, Ltd., Tokyo 100-8280 (JP)
(72) Inventor: KATAYAMA, Kento, 100-8280 Tokyo (JP); SUZUKI, Akane, 100-8280 Tokyo (JP); ANZAI, Kosuke, 100-8280 Tokyo (JP); FUJISHIRO, Takahiro, 100-8280 Tokyo (JP); NISHIKAWA, Yukihiro, 100-8280 Tokyo (JP); OGAWA, Masami, 100-8280 Tokyo (JP)
(74) Representative: MERH-IP Matias Erny Reichl Hoffmann Patentanwälte PartG mbB

(57) **Abstract**

A credential adjustment system (100) is a system that adjusts a credential, including at least: a processor (101); and a storage device (102, 103), characterized in that the credential adjustment system (100) includes at least a computer that is connected to a terminal (500) used by a holder of the credential and a terminal (600) used by a verifier for attribute information so as to be able to perform data communication with each other, and the processor (101) presents a candidate of attribute information necessary for authorization to a terminal (600) used by the verifier on a basis of request content presented by the terminal (600) used by the verifier for attribute information, and creates a format of a request that is made by the terminal (600) used by the verifier for attribute information in order to request the credential from the terminal (500) used by the holder of the credential, and presents the format to the terminal (600) used by the verifier.

## Description

### Technical Field

The present invention relates to a technique for adjusting a credential.

### Background Art

Verifiable credentials (VC) and mobile documents (mDoc), which are digital certificates in which own attribute information is described, are spreading mainly in Europe and the United States. There are many types of VC and mDoc targets such as driver's licenses, qualification information, degrees, and the like, and a holder thereof stores each in an app called Wallet. Protocols and methods for transmission and reception of VC and mDoc are disclosed as specifications from W3C or the like.

In relation to such a background, for example, a technique according to the following Patent Literatures 1 to 3 is known.

### Citation List

### Patent Literature

Patent Literature 1: JP 2004-227343 A
Patent Literature 2: JP 2021-140299 A
Patent Literature 3: WO 2023/026343 A1

### Summary of Invention

### Technical Problem

Patent Literature 1 describes a technique for calculating a degree of relevance from free-text sentences and analyzing an opinion. However, with the technique described in Patent Literature 1, it is difficult to request a credential to be presented, in order to request verifiable credentials (VC) and mobile documents (mDoc) from a holder.

In addition, Patent Literature 2 describes a technique for ensuring confidentiality of personal information in matching using information regarding a user. However, with the technique described in Patent Literature 2, it is not possible to create a request that meets the request of a verifier. Therefore, similarly to the technique described in Patent Literature 1, it is difficult to request a credential to be presented, in order to request verifiable credentials (VC) or mobile documents (mDoc) from a holder.

In addition, Patent Literature 3 describes a technique for preventing identification of the same user when a plurality of times of verification of credentials are performed by the same user, thereby maintaining unlinkability. However, in the technique described in Patent Literature 3, since a verifier server itself determines a credential request, it is difficult for the verifier to determine which one of a wide variety of verifiable credentials (VC) and mobile documents (mDoc) is appropriate for authorizing the holder.

In addition, in the technique described in Patent Literature 3, since the verifier server itself requests/creates a credential request, it is difficult to request a credential to be presented, in order to request a wide variety of verifiable credentials (VC) from a holder.

The present invention has been made in view of the above problems, and an object of the present invention is to provide a technique that allows a verifier for attribute information to easily create a format of a request that is made in order to request a credential from a holder of the credential. The object is solved by the appended claims.

### Solution to Problem

A credential adjustment system according to the present invention is a system that adjusts a credential, including at least: a processor; and a storage device, characterized in that the credential adjustment system includes at least a computer that is connected to a terminal used by a holder of the credential and a terminal used by a verifier for attribute information so as to be able to perform data communication with each other, and the processor presents a candidate of attribute information necessary for authorization to a terminal used by the verifier on the basis of request content presented by the terminal used by the verifier for attribute information, and creates a format of a request that is made by the terminal used by the verifier for attribute information in order to request the credential from the terminal used by the holder of the credential, and presents the format to the terminal used by the verifier.

### Advantageous Effects of Invention

According to the present invention, the verifier for attribute information can easily create the format of the request that is made in order to request the credential from the holder of the credential.

In addition, the problem disclosed in the present application and the method for solving the problem will be clarified by the description of embodiments for carrying out the invention and the drawings.

### Brief Description of Drawings

Fig. 1 is a diagram illustrating an example of a configuration of an entire system including a credential adjustment system.
Fig. 2 is a diagram illustrating an example of a hardware configuration of the credential adjustment system.
Fig. 3 is a diagram illustrating an example of functional blocks of the credential adjustment system.
Fig. 4 is a diagram illustrating an example of functional blocks of an issuer.
Fig. 5 is a diagram illustrating an example of functional blocks of a holder.
Fig. 6 is a diagram illustrating an example of functional blocks of a verifier.
Fig. 7 is a diagram schematically illustrating a flow of various types of data processing executed in the credential adjustment system.
Fig. 8 is a diagram illustrating an example of registration information of a credential search database (DB).
Fig. 9 is a diagram illustrating an example of the registration information of the credential format database (DB).
Fig. 10 is a diagram schematically illustrating a flow of processing executed in the credential adjustment system in attribute information candidate presentation processing.
Fig. 11 is a diagram illustrating an example of a GUI display screen in the attribute information candidate presentation processing.
Fig. 12 is a sequence diagram illustrating an example of a flow of credential registration processing in a case where the issuer performs registration by itself.
Fig. 13 is a sequence diagram illustrating an example of a flow of credential registration processing in a case where credential information is created by the credential adjustment system.
Fig. 14 is a sequence diagram illustrating an example of a flow of the attribute information candidate presentation processing and attribute verification processing in a case where there is a credential that satisfies a request.
Fig. 15 is a diagram illustrating an example of a GUI display screen in the attribute information verification processing.
Fig. 16 is a diagram illustrating an example of the GUI display screen in the attribute information verification processing.
Fig. 17 is a diagram illustrating an example of the GUI display screen in the attribute information verification processing.
Fig. 18 is a diagram illustrating an example of the GUI display screen in the attribute information verification processing.
Fig. 19 is a diagram illustrating an example of the GUI display screen in the attribute information verification processing.
Fig. 20 is a sequence diagram illustrating an example of a flow of the attribute information candidate presentation processing in a case where there is no credential that satisfies a request.
Fig. 21 is a sequence diagram illustrating an example of a flow of presentation definition creation processing.
Fig. 22 is a diagram illustrating an example of attribute information subjected to condition processing by the attribute information verification processing.
Fig. 23 is a diagram illustrating an example of a presentation definition created by the credential adjustment system.

### Description of Embodiments

Hereinafter, an embodiment of the present invention will be described in detail with reference to the drawings. However, the present invention is not to be construed as being limited to the description of the embodiment described below. Examples in which the specific configuration is modified without departing from the spirit or gist of the present invention are also included. For example, the following embodiment describes the present invention in detail, and is not necessarily limited to those having all the configurations included in the description.

In the configuration of the invention described below, the same reference numerals are commonly used for the same portions and/or elements or portions and/or elements having similar functions between different drawings, and redundant description may be omitted.

In addition, in a case where there are a plurality of the same portions and/or elements or portions and/or elements having similar functions, the same reference numerals may be attached with different subscripts in order to distinguish the plurality of portions and/or elements. On the other hand, in a case where it is not necessary to distinguish the plurality of portions and/or elements, the description may be given with the subscript omitted.

In addition, in this specification and the like, notations such as "first", "second", "third", and the like are attached to identify the components, and do not necessarily limit the number, order, contents, and the like. Characters and numbers for identifying such components are used for each context, and characters and numbers used in one context do not necessarily indicate the same configuration in another context. In addition, it does not prevent a component identified by a certain character or number from also functioning as a component identified by another character or number.

That is, a component represented by a singular form in the present specification includes a plural form unless the context clearly indicates otherwise.

In addition, in the following description, an "interface device" may be one or more interface devices. The one or more interface devices may be at least one of the following:
· One or more input/output interface devices. The input/output interface device is an interface device for at least one of an input/output (I/O) device or a remote display computer. The input/output interface device for the display computer may be a communication interface device. The at least one I/O device may be either a user interface device, for example, an input interface device such as a keyboard and a pointing device, or an output interface device such as a display device.
· One or more communication interface devices. The one or more communication interface devices may be one or more homogeneous communication interface devices (for example, one or more network interface cards (NIC)), or may be two or more heterogeneous communication interface devices (for example, an NIC and a host bus adapter (HBA)). Note that a network that the communication interface device accesses for communication may be the Internet, a local area network (LAN), a wide area network (WAN), a mobile phone network, or the like, but is not limited thereto.

In addition, in the following description, a "storage device" includes at least one or more memory devices (hereinafter, also referred to as "memory") as a main storage device. The memory may be a volatile memory device (hereinafter, also referred to as a "volatile memory") or a non-volatile memory device (hereinafter, also referred to as a "non-volatile memory"). In addition, the storage device may include one or more physical storage devices (PDEV) as an auxiliary storage device in addition to one or more memories. The PDEV is typically a non-volatile storage device (for example, a permanent storage device), and may be specifically, for example, various storage devices (hereinafter, also referred to as "storage") such as a hard disk drive (HDD), a solid state drive (SSD), a non-volatile memory express (NVME) drive, or a storage class memory (SCM).

That is, in the following description, the "storage device" may be at least a memory that is a main storage device and a storage that is an auxiliary storage device.

In addition, in the following description, a "processor" that is an arithmetic device is one or more processor devices. The at least one processor device is typically a microprocessor device such as a central processing unit (CPU), but may include another type of processor device such as a graphics processing unit (GPU), a micro processing unit (MPU), or a digital signal processor (DSP). The at least one processor device may be single-core or multi-core. The at least one processor device may be a processor core. The at least one processor device may be or include a broad sense processor device, such as a hardware circuit (for example, a field programmable gate array (FPGA), a complex programmable logic device (CPLD), or an application specific integrated circuit (ASIC)) that performs some or all of the processing.

In addition, in the following description, a function may be described using an expression "xxx unit", but the function may be realized by a processor executing one or more computer programs (hereinafter, also simply referred to as a "program"), may be realized by one or more hardware circuits (for example, FPGA or ASIC), or may be realized by a combination thereof. In a case where the function is realized by the processor executing the program, determined processing is appropriately performed by using a storage device and/or an interface device, and thus, the function may be at least a part of the processor. The processing described with the function as the subject may be processing performed by a processor (alternatively, a device such as a controller having the processor). The program may be installed from a program source. The program source may be, for example, a program distribution computer or a computer-readable recording medium (for example, a non-transitory recording medium). The description of each function is an example, and a plurality of functions may be integrated into one function, or one function may be divided into a plurality of functions.

In addition, in the following description, there is a case where processing is described with a "program" as a subject, but the program is executed by the processor to perform determined processing appropriately using a storage device, an interface device, and/or the like, so that the subject of the processing may be a processor (alternatively, a device such as a controller having the processor). The program may be installed in a device such as a computer from a program source. The program source may be, for example, a program distribution server or a computer-readable (for example, non-transitory) recording medium. In addition, in the following description, two or more programs may be realized as one program, or one program may be realized as two or more programs.

In addition, in the following description, an expression such as "yyy database" or "yyy table" may be used to explain information that can be obtained as an output for an input, but the information may be represented by data having any structure (for example, may be structured data or unstructured data), or may be a learning model represented by a neural network, a genetic algorithm, or a random forest that generates an output with respect to an input. Therefore, the "yyy database" and the "yyy table" can be rephrased as "yyy information". In addition, in the following description, the configuration of each database or table is an example, and one database or table may be divided into two or more databases or tables, or all or a part of two or more databases or tables may be one database or table.

In addition, in the following description, a "data set" means data (a lump of logical electronic data) including one or more data elements, and may be, for example, any of a record, a file, a key value pair, or a tuple.

In addition, in the following description, the "credential adjustment system" may be a device (for example, an on-premises device) configured by one or more physical computers, or may be a system (for example, a cloud computing system) realized on a physical calculation resource group (for example, a cloud infrastructure). The credential adjustment system "displaying" information for display may be displaying the information for display on a display device included in a computer (credential adjustment system), or may be transmitting the information for display to the display computer (for example, a user terminal) by the computer (credential adjustment system) (in the latter case, the information for display is displayed by the display computer).

### <System configuration example>

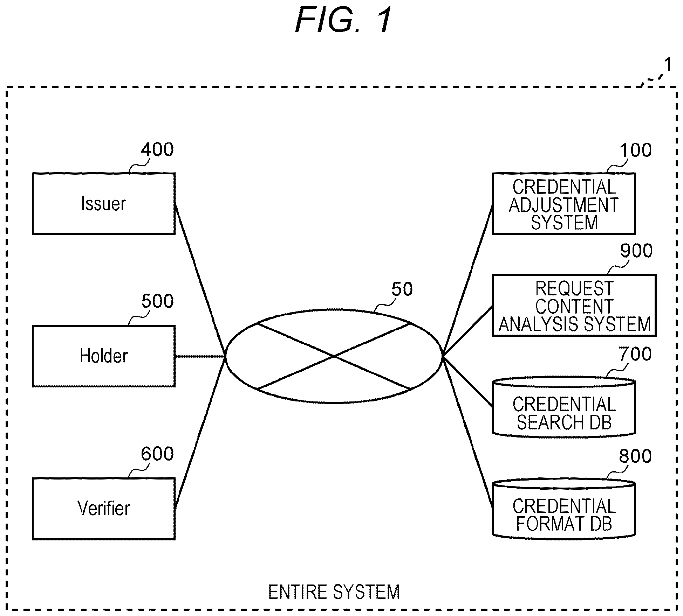

First, a configuration example of an entire system 1 including a credential adjustment system 100 according to the present embodiment will be described with reference to Figs. 1 to 6.

Fig. 1 is a diagram illustrating an example of a configuration of the entire system 1 including the credential adjustment system 100.

### (Configuration example of entire system)

The credential adjustment system 100 according to the present embodiment is schematically a computer system that presents, on the basis of request content presented by a verifier for attribute information, a candidate of attribute information necessary for authorization to the verifier, creates a format of a request that is made by the verifier for attribute information in order to request a credential (digital certificate) from a holder of the credential, and presents the format of the request to the verifier, thereby reducing a burden on the verifier at the time of credential matching. For this purpose, the credential adjustment system 100 is a computer system capable of analyzing request content and then creating a presentation definition (hereinafter, also referred to as "PD"), and is realized by at least one computer and/or server (each) including each configuration described later. That is, the credential adjustment system 100 is a general-purpose computer system configured on one computer physically or on a plurality of computers configured logically or physically, and may operate on separate threads on the same computer or operate on a virtual computer constructed on a plurality of physical computer resources. In the present embodiment, it is described that the credential adjustment system 100 includes one computer, but the credential adjustment system 100 may include, for example, a plurality of computers and/or servers.

Regarding the credential adjustment system 100, as illustrated in Fig. 1, various devices and terminals such as a terminal (hereinafter, also referred to as an "issuer 400") used by an issuer, a terminal (hereinafter, also referred to as a "holder 500") used by a holder of a credential, a terminal (hereinafter, also referred to as a "verifier 600") used by a verifier for attribute information, a data server that stores a credential search database (hereinafter, also referred to as a "credential search DB") 700 and a credential format database (hereinafter, also referred to as a "credential format DB") 800, and a request content analysis system 900 that is a computer system that determines an appropriate credential from request content and a data search result are connected as external devices so as to be able to perform data communication with each other via an appropriate communication network (hereinafter, also simply referred to as a "network") 50 such as the Internet and a dedicated line.

The credential adjustment system 100 and various external devices such as the issuer 400, the holder 500, the verifier 600, the data server that stores the credential search database 700 and the credential format database 800, and the request content analysis system 900 are connected so as to be able to perform data communication with each other via the network 50 as illustrated in Fig. 1, thereby constituting the entire system 1 as a whole.

In addition, regarding the credential adjustment system 100, as an external device, various user terminals (not illustrated) such as a laptop PC, a tablet, and a smartphone owned by a user such as an administrator of the credential adjustment system 100 and a system administrator of the entire system 1 including the credential adjustment system 100 are connected so as to be able to perform data communication with each other via the network 50, in a form in which each of the various user terminals includes an input device (not illustrated) and a display device (not illustrated). Among these, the input device is any of various input interface devices for receiving an input operation from the user, such as a keyboard, a pointing device, and a touch panel. In addition, the display device is any of various output interface devices for outputting a processing result in a format that can be visually recognized by the user, such as a liquid crystal display or a touch screen. Note that, in the present embodiment, it is described that both the input device and the display device are integrally operated in the same user terminal so as to bear an input function and an output function, respectively, but the input device and the display device may be realized as, for example, separate terminals. In addition, for example, each user terminal and the network 50 are wirelessly connected by Wi-Fi (registered trademark), LTE (registered trademark), 4G, 5G, or the like, but may be connected by wire. Each user of the credential adjustment system 100 possessing the user terminal is given a unique ID called a user ID in advance.

In addition, another apparatus, device, terminal, or the like may be connected as an external device to the credential adjustment system 100 so as to be able to perform data communication via the network 50. In this case, the external device and the network 50 may be connected by wire or wirelessly via a well-known communication apparatus (not illustrated). In addition, in this case, the credential adjustment system 100 may acquire, from such an external device, various types of data used for each processing to be described later, for example.

Note that, in the present embodiment, it has been described that the credential adjustment system 100 includes one computer. However, for example, the credential adjustment system 100 may include a plurality of computers.

In addition, in the present embodiment, it has been described that the credential adjustment system 100 and various external devices such as the issuer 400, the holder 500, the verifier 600, the data server that stores the credential search database 700 and the credential format database 800, the request content analysis system 900, and the user terminal are configured as separate devices. However, the credential adjustment system 100 and such an external device may be configured in the same device, for example. In this case, the credential adjustment system may be configured as a system including these external devices, for example. In addition, for example, the credential adjustment system may be configured to include some or all of the functions of these external devices.

### (Hardware configuration example of credential adjustment system 100)

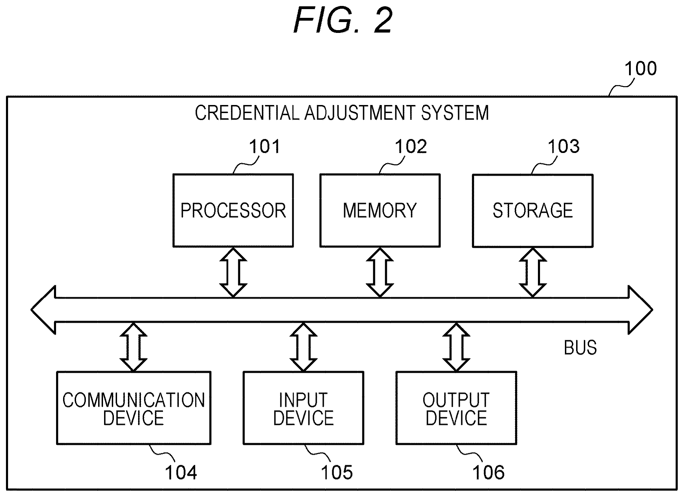

Next, an example of a hardware configuration of the credential adjustment system 100 will be described with reference to Fig. 2.

The credential adjustment system 100 according to the present embodiment is realized by a computer including at least a storage device including a memory 102 that is a main storage device and a storage 103 that is an auxiliary storage device, an interface device including at least a communication device 104, and a processor 101 that is an arithmetic device connected thereto. In addition, also, in the credential adjustment system 100, the interface device may include an input device 105 and/or an output device 106.

The following description is provided on the assumption that the credential adjustment system 100 is realized by one general-purpose computer including one or more processors 101, one or more memories 102, one or more storages 103, one or more communication devices 104, one or more input devices 105, one or more output devices 106 and a wired or wireless BUS connecting them.

The storage 103, which is an auxiliary storage device, is an auxiliary storage device including a non-volatile storage element such as a flash memory. Specific examples of the storage 103 include various storages such as a solid state drive (SSD) and a hard disk drive (HDD). The storage 103 stores at least a credential adjustment program (not illustrated). This credential adjustment program is a computer program for realizing functions necessary as the credential adjustment system 100.

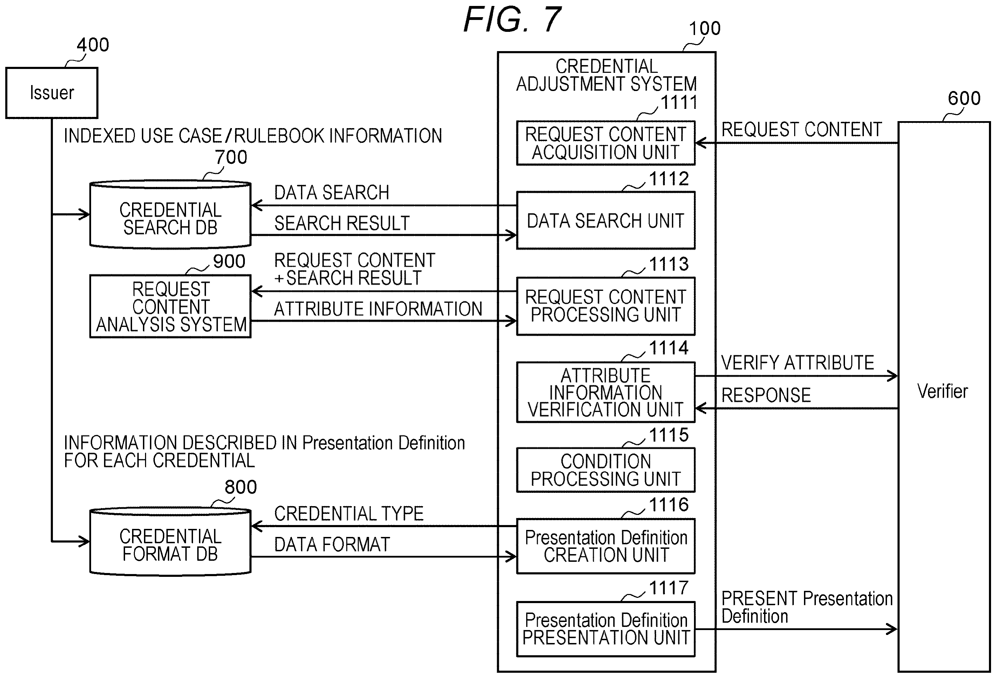

That is, when the credential adjustment program is executed by the processor 101, functions performed by respective functional units included in the credential adjustment system 100, such as a request content acquisition unit 1111, a data search unit 1112, a request content processing unit 1113, an attribute information verification unit 1114, a condition processing unit 1115, a presentation definition creation unit 1116, and a presentation definition presentation unit 1117, which will be described later, are realized. In other words, when the credential adjustment program is executed by the processor 101, various types of processing to be described later with reference to Figs. 7 to 23 are performed.

Note that the credential adjustment program is provided to the credential adjustment system 100 via the network 50 and/or various removable media such as a CD-ROM and a flash memory, and is stored in the storage 103 that is a non-transitory storage medium. Therefore, the credential adjustment system 100 preferably has an interface for reading data from the removable media.

In addition, the credential adjustment program may also be installed from a program source. The program source may be, for example, a program distribution computer, a computer-readable recording medium, or the like. In addition, the credential adjustment program may be configured by a device driver, an operating system, various application programs located in upper layers thereof, and a library that provides common functions to these programs. Further, two or more programs may be realized as one credential adjustment program, or one credential adjustment program may be realized as two or more programs.

The memory 102, which is a main storage device, is a main storage device mainly including a volatile storage element such as a random access memory (RAM). In addition, the memory 102 includes a read only memory (ROM) including a non-volatile storage element. The ROM stores an invariable program (for example, BIOS) and the like. The memory 102 temporarily holds data representing various types of information read from the storage 103 and various types of data acquired via the communication device 104 and/or the input device 105.

The processor 101, which is an arithmetic device, is a processor device such as a central processing unit (CPU) and various co-processors. The processor 101 performs centralized control of the credential adjustment system 100 itself by calling and executing various computer programs including the credential adjustment program in the memory 102, and controls an arithmetic unit 111 that performs various types of processing such as computation, determination, and control.

The interface device includes the communication device 104 that controls a communication unit 114 to be described later, the input device 105 that controls an input unit 115 to be described later, and the output device 106 that controls an output unit 116 to be described later.

The communication device 104 is any of various communication interface devices that are connected to the network 50 and control communication with various external devices, such as the issuer 400, the holder 500, the verifier 600, the data server that stores the credential search database 700 and the credential format database 800, the request content analysis system 900, and the user terminal, according to a predetermined protocol.

The input device 105 is, for example, any of various input interface devices such as a touch panel, a keyboard, a mouse, and a controller for receiving an input operation from the user of the credential adjustment system 100.

The output device 106 is, for example, any of various output interface devices, including a display device such as a liquid crystal display or a touch screen, for outputting a processing result of the credential adjustment program to the user of the credential adjustment system 100 in a recognizable format.

Note that the credential adjustment system 100 may be realized by an independent device or may be realized by an embedded apparatus.

### (Functional block example of credential adjustment system 100)

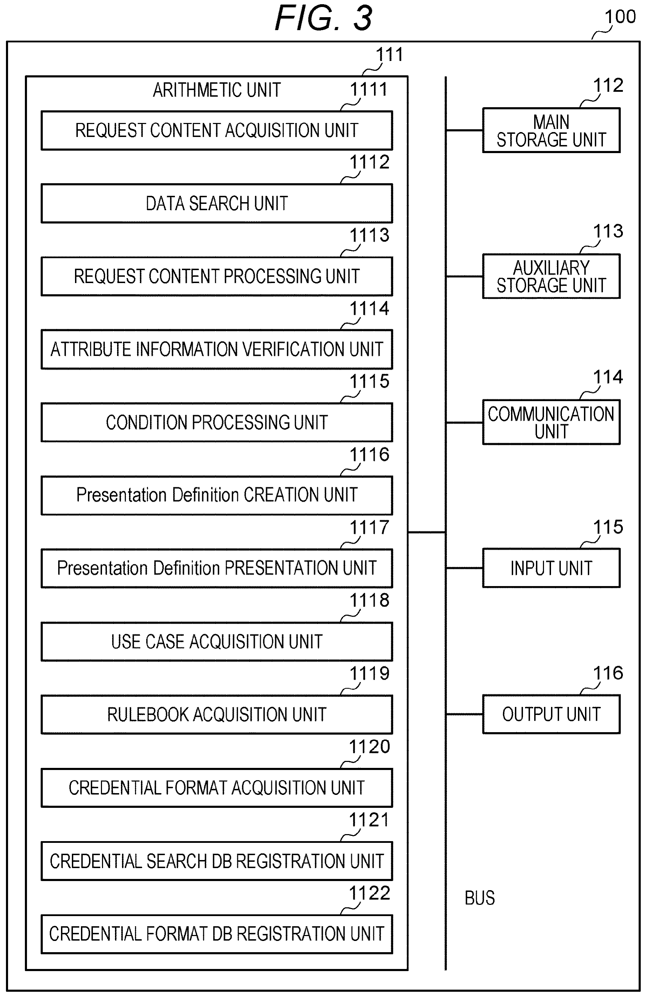

Next, an example of blocks of various functions included in the credential adjustment system 100 will be described with reference to Fig. 3. Note that each block described below indicates a block of a functional unit instead of a configuration of a hardware unit.

The credential adjustment system 100 mainly includes functional blocks of the arithmetic unit 111 realized by the processor 101 described above, a main storage unit 112 realized by the memory 102 described above, an auxiliary storage unit 113 realized by the storage 103 described above, the communication unit 114 realized by the communication device 104 described above, and a user interface unit including the input unit 115 realized by the input device 105 described above and the output unit 116 realized by the output device 106 described above. Note that, in the following description, the main storage unit 112 and the auxiliary storage unit 113 may be collectively referred to as a storage unit (112, 113).

The arithmetic unit 111 executes various types of data processing on the basis of programs and data stored in the storage unit (112, 113) and data acquired by the communication unit 114. The arithmetic unit 111 also functions as an interface of the storage unit (112, 113) and the communication unit 114.

The arithmetic unit 111 includes at least functional blocks of the request content acquisition unit 1111, the data search unit 1112, the request content processing unit 1113, the attribute information verification unit 1114, the condition processing unit 1115, the presentation definition creation unit 1116, and the presentation definition presentation unit 1117 by the processor 101 executing the above-described credential adjustment program.

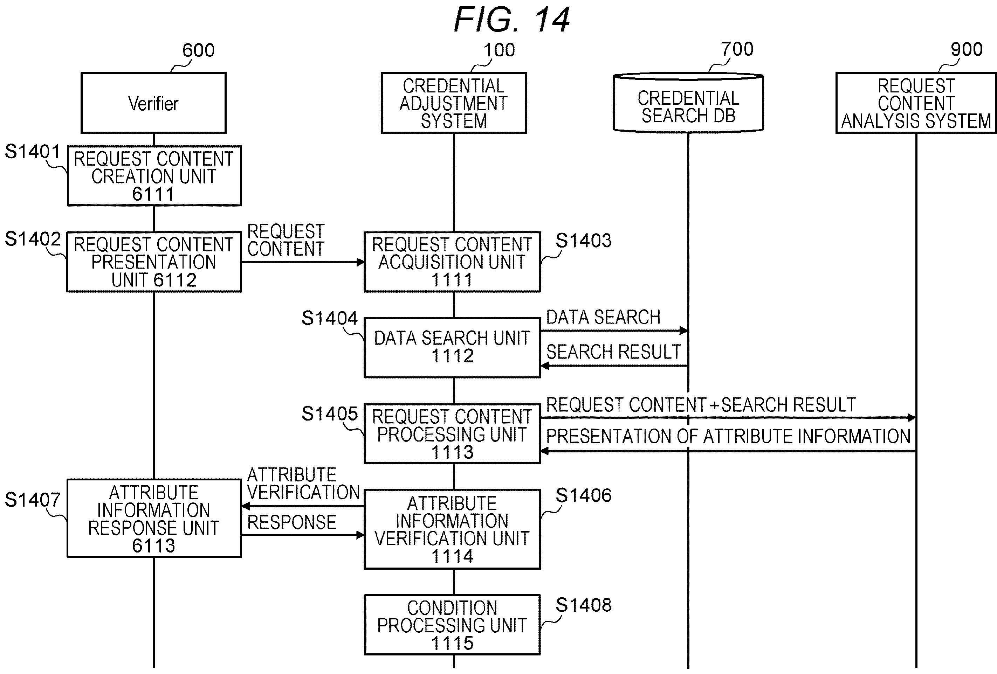

The request content acquisition unit 1111 executes at least processing of acquiring the request content from the verifier 600 (to be described in detail later with reference to Fig. 14).

The data search unit 1112 executes at least processing related to data search for determining necessary attribute information according to the request content (to be described in detail later with reference to Fig. 14).

The request content processing unit 1113 executes at least processing of requesting the request content analysis system 900 to provide necessary attribute information by using the request content and the data search result (to be described in detail later with reference to Fig. 14).

The attribute information verification unit 1114 executes at least processing of causing the verifier 600 to verify the presented content of the attribute information (to be described in detail later with reference to Fig. 14).

The condition processing unit 1115 executes at least processing for a result of the verification processing by the verifier 600, performed by the attribute information verification unit 1114 (to be described in detail later with reference to Fig. 14).

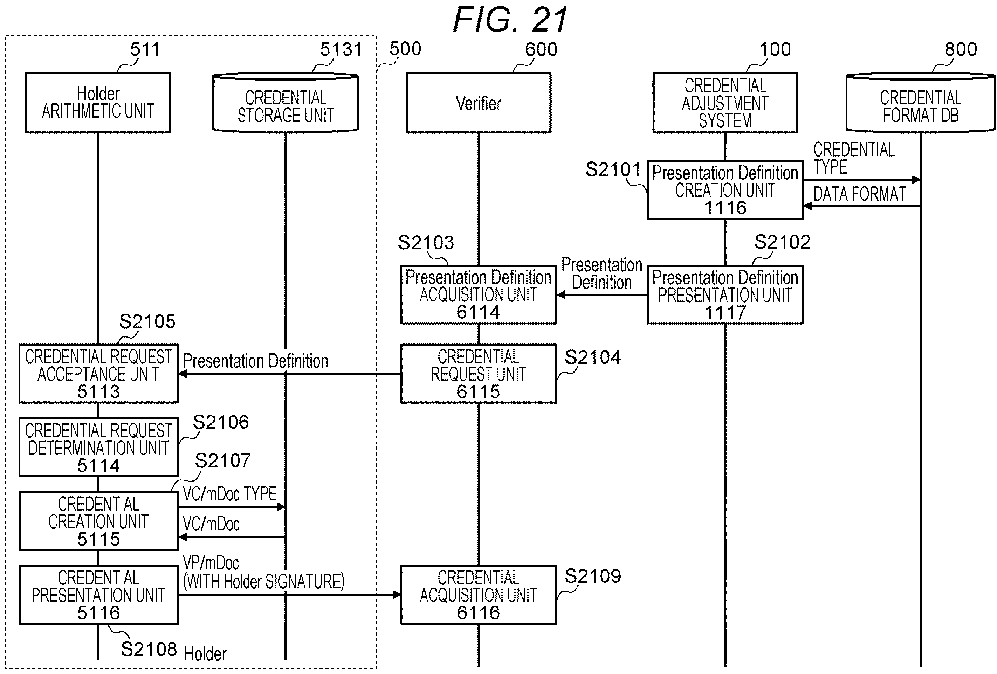

The presentation definition creation unit 1116 executes at least processing of creating a presentation definition from the verification content (to be described in detail later with reference to Fig. 21).

The presentation definition presentation unit 1117 executes at least processing of presenting a presentation definition to the verifier 600 (to be described in detail later with reference to Fig. 21).

In addition, the arithmetic unit 111 may further include a use case acquisition unit 1118, a rulebook acquisition unit 1119, a credential format acquisition unit 1120, a credential search database registration unit 1121, and a credential format database registration unit 1122 as functional blocks by the processor 101 executing the above-described credential adjustment program.

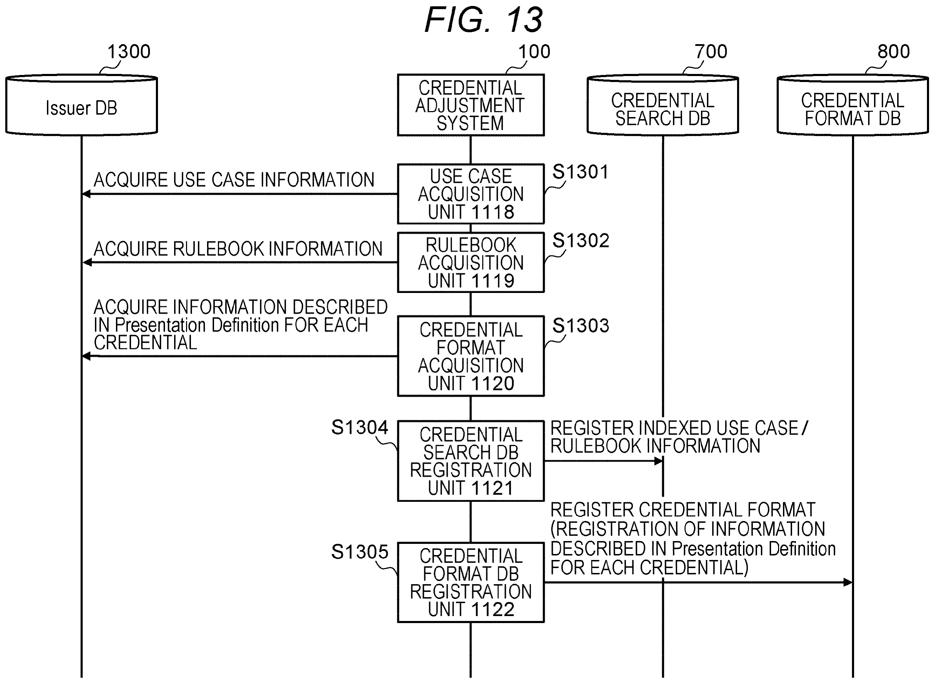

The use case acquisition unit 1118 executes at least processing related to acquiring a use case (to be described in detail later with reference to Fig. 13).

The rulebook acquisition unit 1119 executes at least processing related to acquiring a rulebook (to be described in detail later with reference to Fig. 13).

The credential format acquisition unit 1120 executes at least processing of acquiring a format of a credential (to be described in detail later with reference to Fig. 13).

The credential search database registration unit 1121 performs at least registration processing in the credential search database 700 (to be described in detail later with reference to Fig. 13).

The credential format database registration unit 1122 performs at least registration processing in the credential format database 800 (to be described in detail later with reference to Fig. 13).

The arithmetic unit 111 is configured using the processor 101 that is an arithmetic device, and can realize these functional blocks by executing the above-described credential adjustment program. Note that the arithmetic unit 111 may be configured using a logic circuit such as a field-programmable gate array (FPGA) or an application specific integrated circuit (ASIC), for example, instead of the processor 101. In addition, for example, the arithmetic unit 111 may be configured by a combination of the processor 101 and a logic circuit.

As described above, the storage unit (112, 113) includes the main storage unit 112 realized by the memory 102 that is a main storage device and the auxiliary storage unit 113 realized by the storage 103 that is an auxiliary storage device, and stores a program for supplying various processing instructions to the arithmetic unit 111 and data representing various types of information used in processing executed by the arithmetic unit 111.

The arithmetic unit 111 can execute various types of processing to be described later by reading and writing data representing these pieces of information to and from the storage unit (112, 113).

The communication unit 114 is in charge of communication processing, which is performed via the Internet (an example of the network 50), with various external devices such as the issuer 400, the holder 500, the verifier 600, the data server that stores the credential search database 700 and the credential format database 800, the request content analysis system 900, and the user terminal. The communication unit 114 is configured using, for example, a network interface card (NIC), a host bus adapter (HBA), or the like.

The user interface unit (not illustrated) includes functional blocks of the input unit 115 and the output unit 116.

The input unit 115 is in charge of processing related to input, such as reception of an input operation from the user, among processing related to the user interface. The input unit 115 includes, for example, various input devices 105 such as a touch panel, a keyboard, a mouse, and a controller, and detects various operations performed by the user.

The output unit 116 is in charge of processing related to output, such as display of various screens and voice output, among the processing related to the user interface. The output unit 116 is configured, for example, using various output devices 106 including a display device such as a touch screen or a liquid crystal display.

Note that, for example, in a case where remote login is performed to the credential adjustment system 100 from another external device such as a tablet, a smartphone, or a laptop PC, or in a case where input information from the external device is received or output information is provided to the external device via the communication device 104, mounting of the input unit 115 and/or the output unit 116 is not essential. In this case, the credential adjustment system 100 may have a function of a web server to accept access using a predetermined protocol from an external device.

That is, each component of the credential adjustment system 100 is realized by cooperation of hardware including the processor 101 that is an arithmetic device, a storage device such as the memory 102 that is a main storage device and the storage 103 that is an auxiliary storage device, an interface device such as the communication device 104, the input device 105, and an output device 106, and a wired or wireless BUS connecting them, and software that is stored in the storage device (102, 103) and supplies a processing instruction to a computing unit (processor 101).

The above description regarding the functions of the credential adjustment system 100 has been made on the assumption that the functions of the credential adjustment system 100 are integrally realized by one computer. However, each of these functions may be realized by a plurality of computers and/or servers connected to each other. In addition, the credential adjustment system 100 may include a general-purpose computer such as a laptop PC or various portable apparatuses.

That is, in the credential adjustment system 100, each functional unit such as the request content acquisition unit 1111, the data search unit 1112, the request content processing unit 1113, the attribute information verification unit 1114, the condition processing unit 1115, the presentation definition creation unit 1116, and the presentation definition presentation unit 1117 may operate on a separate physical or logical computer, or may operate on one physical or logical computer in combination of a plurality of functional units.

In addition, the above description of each function is an example, and a plurality of functions may be integrated into one function, or one function may be divided into a plurality of functions.

In addition, the credential adjustment system 100 may further include another function in addition to the above functions. For example, the credential adjustment system 100 may be configured to include some or all of various functions included in various external devices such as the issuer 400, the holder 500, the verifier 600, a data server that stores the credential search database 700 and the credential format database 800, the request content analysis system 900, and the user terminal.

### (Hardware configuration example of external device)

Note that, among various external devices that are connected to the credential adjustment system 100 via the network 50 and perform data communication with each other, hardware configurations of at least the above-described devices such as the issuer 400, the holder 500, the verifier 600, the data server that stores the credential search database 700 and the credential format database 800, the request content analysis system 900, and the user terminal are substantially similar to the hardware configuration of the credential adjustment system 100 illustrated in Fig. 2.

In other words, in the present embodiment, similarly to the hardware configuration of the credential adjustment system 100 illustrated in Fig. 2, each device such as the issuer 400, the holder 500, the verifier 600, the data server that stores the credential search database 700 and the credential format database 800, the request content analysis system 900, and the user terminal is realized by a computer including at least a storage device including a memory and a storage, an interface device including at least a communication device, and a processor connected thereto. In addition, in these external devices, the interface device may include an input device and/or an output device.

The following description is made on the assumption that all of various external devices described above such as the issuer 400, the holder 500, the verifier 600, the data server that stores the credential search database 700 and the credential format database 800, the request content analysis system 900, and the user terminal are realized by one general-purpose computer including one or more processors, one or more memories, one or more storages, one or more communication devices, one or more input devices (for example, the input device of the user terminal), one or more output devices (for example, the display device of the user terminal), and a wired or wireless BUS that connects them.

### (Functional block example of external device)

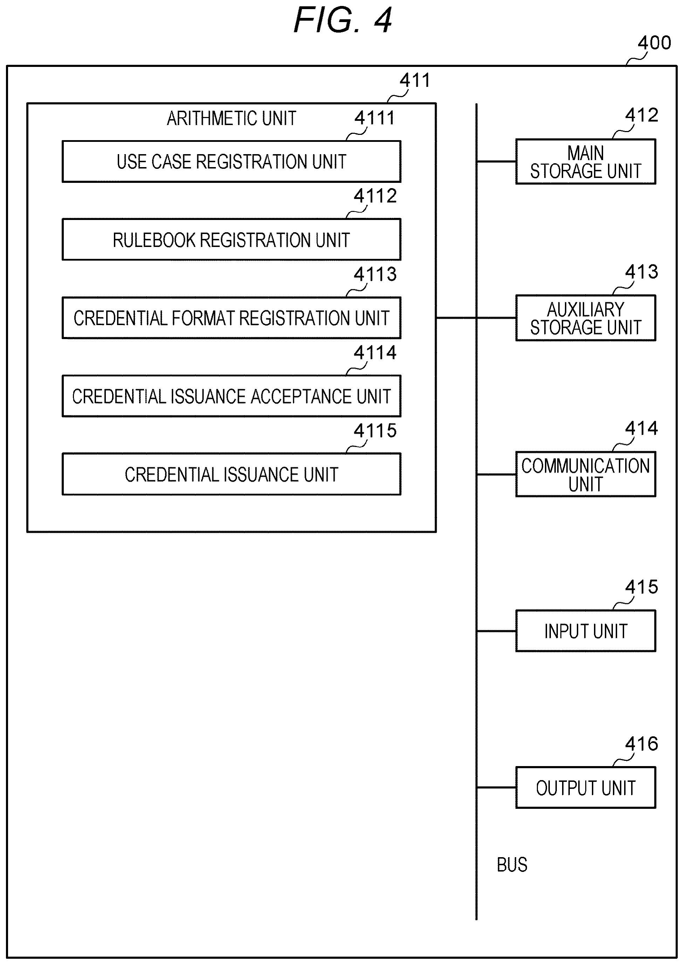

Next, an example of blocks of various functions provided in each of these external devices (400, 500, 600, 700, 800, 900) will be described with reference to Figs. 4 to 6. Note that each block described below indicates a block of a functional unit instead of a configuration of a hardware unit.

### (Functional block example of issuer 400)

Fig. 4 is a diagram illustrating an example of blocks of various functions included in the issuer 400.

In the present embodiment, the issuer 400 mainly includes functional blocks of an arithmetic unit 411 realized by a processor (not illustrated), a main storage unit 412 realized by a memory (not illustrated), an auxiliary storage unit 413 realized by a storage (not illustrated), a communication unit 414 realized by a communication device (not illustrated), and a user interface unit including an input unit 415 realized by an input device (not illustrated) and an output unit 416 realized by an output device (not illustrated). Note that, in the following description, the main storage unit 412 and the auxiliary storage unit 413 may be collectively referred to as a storage unit (412, 413).

The arithmetic unit 411 executes various types of data processing on the basis of a program or data stored in the storage unit (412, 413) and/or data acquired by the communication unit 414. In addition, the arithmetic unit 411 also functions as an interface of the storage unit (412, 413) and the communication unit 414.

The arithmetic unit 411 includes at least functional blocks of a use case registration unit 4111, a rulebook registration unit 4112, a credential format registration unit 4113, a credential issuance acceptance unit 4114, and a credential issuance unit 4115.

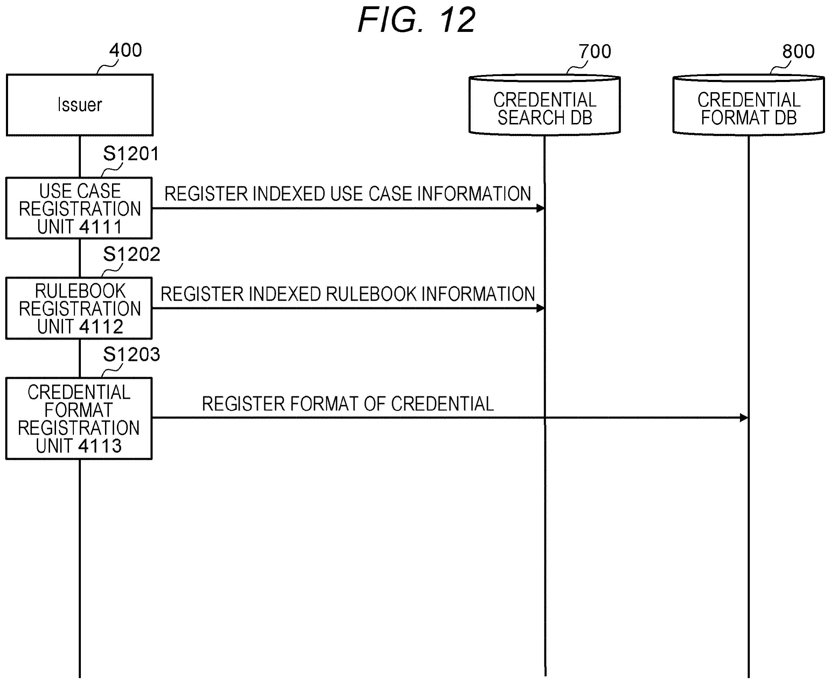

The use case registration unit 4111 executes at least processing related to registering a use case (to be described in detail later with reference to Fig. 12).

The rulebook registration unit 4112 executes at least processing related to registering a rulebook (to be described in detail later with reference to Fig. 12).

The credential format registration unit 4113 executes at least processing related to registering a format of a credential (to be described in detail later with reference to Fig. 12).

The credential issuance acceptance unit 4114 executes at least processing related to accepting issuance of a credential (to be described in detail later with reference to Fig. 12).

The credential issuance unit 4115 executes at least processing related to issuing a credential (to be described in detail later with reference to Fig. 12).

The arithmetic unit 411 is configured using a processor that is an arithmetic device, and can realize these functional blocks by executing corresponding programs. Note that the arithmetic unit 411 may be configured using a logic circuit such as a field-programmable gate array (FPGA) or an application specific integrated circuit (ASIC), for example, instead of the processor. In addition, for example, the arithmetic unit 411 may be configured by a combination of the processor and a logic circuit.

As described above, the storage unit (412, 413) includes the main storage unit 412 realized by the memory that is a main storage device and the auxiliary storage unit 413 realized by the storage that is an auxiliary storage device, and stores a program for supplying various processing instructions to the arithmetic unit 411 and data representing various types of information used in processing executed by the arithmetic unit 411.

The arithmetic unit 411 can execute various types of processing to be described later by reading and writing such programs and data in the storage unit (412, 413).

The communication unit 414 is in charge of communication processing with the credential adjustment system 100 and various other external devices performed via the Internet (an example of the network 50). The communication unit 414 is configured using, for example, a network interface card (NIC), a host bus adapter (HBA), or the like.

The user interface unit (not illustrated) includes functional blocks of the input unit 415 and the output unit 416.

The input unit 415 is in charge of processing related to input, such as reception of an input operation from the user, among processing related to the user interface. The input unit 415 includes, for example, various input devices such as a touch panel, a keyboard, a mouse, and a controller, and detects various operations performed by the user.

The output unit 416 is in charge of processing related to output, such as display of various screens and voice output, among the processing related to the user interface. The output unit 416 is configured, for example, using various output devices including a display device such as a touch screen or a liquid crystal display.

Note that, for example, in a case where remote login is performed to the issuer 400 from another terminal such as a tablet, a smartphone, or a laptop PC, or in a case where input information from another terminal is received or output information is provided to another terminal via a communication device, mounting of the input unit 415 and/or the output unit 416 is not essential. In this case, the issuer 400 may have a function of a web server to accept access using a predetermined protocol from the another terminal.

That is, each component of the issuer 400 is realized by cooperation of hardware including a processor that is an arithmetic device, a storage device such as a memory that is a main storage device and a storage that is an auxiliary storage device, an interface device such as a communication device, an input device, and an output device, and a wired or wireless BUS connecting them, and software that is stored in the storage device and supplies a processing instruction to a computing unit (processor).

### (Functional block example of holder 500)

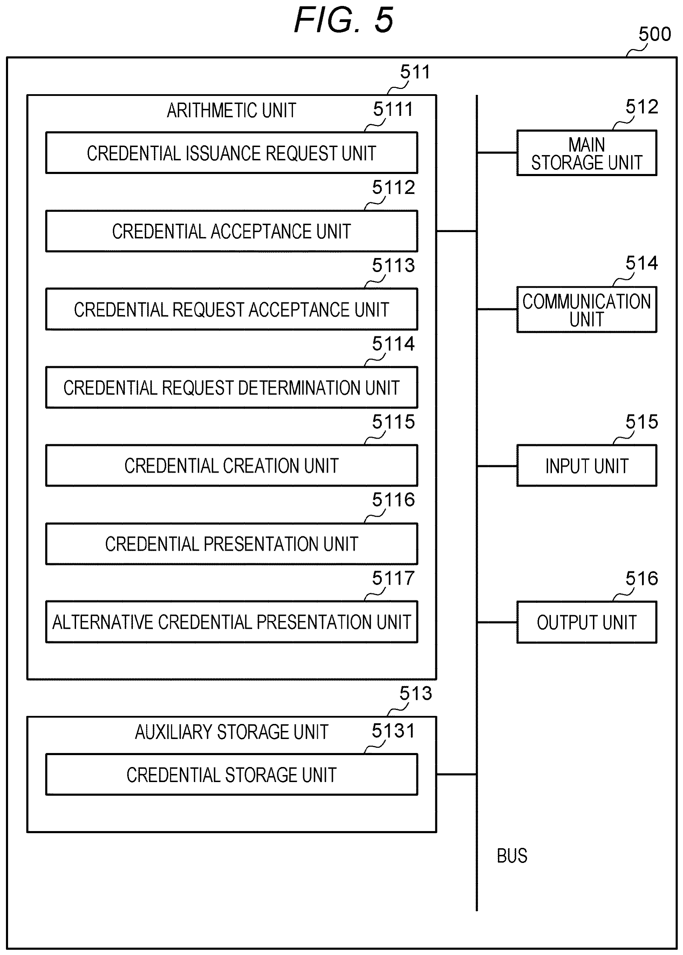

Fig. 5 is a diagram illustrating an example of blocks of various functions included in the holder 500.

In the present embodiment, the holder 500 mainly includes functional blocks of an arithmetic unit 511 realized by a processor (not illustrated), a main storage unit 512 realized by a memory (not illustrated), an auxiliary storage unit 513 realized by a storage (not illustrated), a communication unit 514 realized by a communication device (not illustrated), and a user interface unit including an input unit 515 realized by an input device (not illustrated) and an output unit 516 realized by an output device (not illustrated). Note that, in the following description, the main storage unit 512 and the auxiliary storage unit 513 may be collectively referred to as a storage unit (512, 513).

The arithmetic unit 511 executes various types of data processing on the basis of a program or data stored in the storage unit (512, 513) and/or data acquired by the communication unit 514. In addition, the arithmetic unit 511 also functions as an interface of the storage unit (512, 513) and the communication unit 514.

The arithmetic unit 511 includes at least functional blocks of a credential issuance request unit 5111, a credential acceptance unit 5112, a credential request acceptance unit 5113, a credential request determination unit 5114, a credential creation unit 5115, and a credential presentation unit 5116.

The credential issuance request unit 5111 executes at least processing related to requesting issuance of a credential (to be described in detail later).

The credential acceptance unit 5112 executes at least processing related to accepting a credential (to be described in detail later).

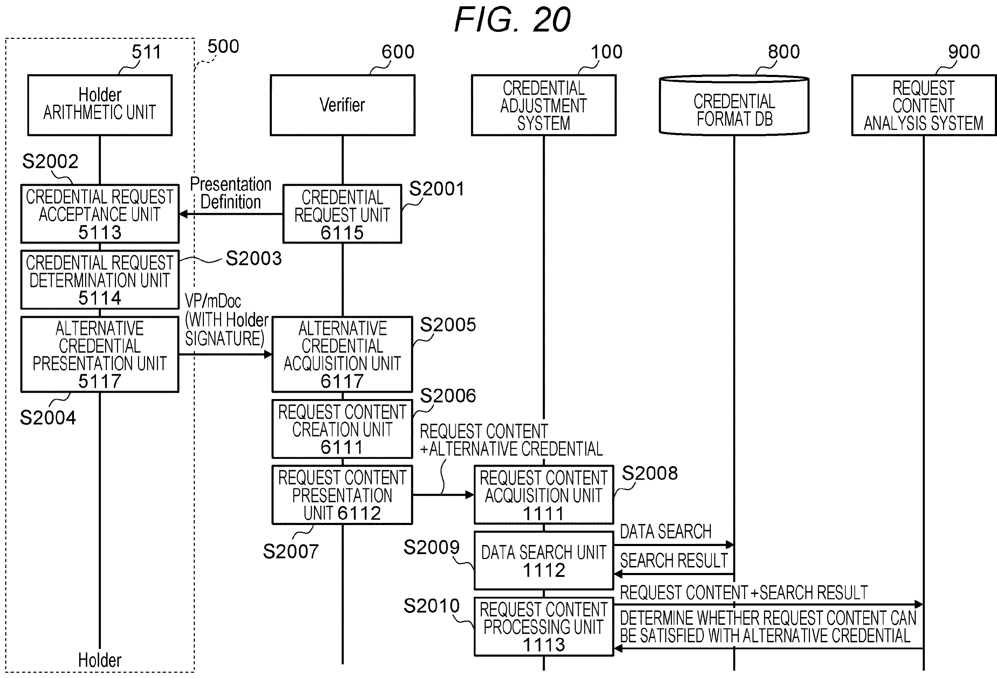

The credential request acceptance unit 5113 executes at least processing related to accepting a credential request (to be described in detail later with reference to Figs. 20 and 21).

The credential request determination unit 5114 executes at least processing related to determining a credential request (to be described in detail later with reference to Figs. 20 and 21).

The credential creation unit 5115 executes at least processing related to creating a credential (to be described in detail later with reference to Fig. 21).

The credential presentation unit 5116 executes at least processing related to presenting a credential (to be described in detail later with reference to Fig. 21).

In addition, the arithmetic unit 511 may further include an alternative credential presentation unit 5117 as a functional block.

The alternative credential presentation unit 5117 executes at least processing related to presenting an alternative credential which represents a substitute for the credential (to be described in detail later with reference to Fig. 20).

The arithmetic unit 511 is configured using a processor that is an arithmetic device, and can realize these functional blocks by executing corresponding programs. Note that the arithmetic unit 511 may be configured using a logic circuit such as a field-programmable gate array (FPGA) or an application specific integrated circuit (ASIC), for example, instead of the processor. In addition, for example, the arithmetic unit 511 may be configured by a combination of a processor and a logic circuit.

As described above, the storage unit (512, 513) includes the main storage unit 512 realized by the memory that is a main storage device and the auxiliary storage unit 513 realized by the storage that is an auxiliary storage device, and stores a program for supplying various processing instructions to the arithmetic unit 511 and data representing various types of information used in processing executed by the arithmetic unit 511.

In addition, the auxiliary storage unit 513 includes at least a credential storage unit 5131 as a functional block.

The credential storage unit 5131 stores at least a credential.

The arithmetic unit 511 can execute various types of processing to be described later by reading and writing such programs and data in the storage unit (512, 513).

The communication unit 514 is in charge of communication processing with the credential adjustment system 100 and various other external devices performed via the Internet (an example of the network 50). The communication unit 514 is configured using, for example, a network interface card (NIC), a host bus adapter (HBA), or the like.

The user interface unit (not illustrated) includes functional blocks of the input unit 515 and the output unit 516.

The input unit 515 is in charge of processing related to input, such as reception of an input operation from the user, among processing related to the user interface. The input unit 515 includes, for example, various input devices such as a touch panel, a keyboard, a mouse, and a controller, and detects various operations performed by the user.

The output unit 516 is in charge of processing related to output, such as display of various screens and voice output, among the processing related to the user interface. The output unit 516 is configured, for example, using various output devices including a display device such as a touch screen or a liquid crystal display.

Note that, for example, in a case where remote login is performed to the holder 500 from another terminal such as a tablet, a smartphone, or a laptop PC, or in a case where input information from another terminal is received or output information is provided to another terminal via a communication device, mounting of the input unit 515 and/or the output unit 516 is not essential. In this case, the holder 500 may have a function of a web server to accept access using a predetermined protocol from the another terminal.

That is, each component of the holder 500 is realized by cooperation of hardware including a processor that is an arithmetic device, a storage device such as a memory that is a main storage device and a storage that is an auxiliary storage device, an interface device such as a communication device, an input device, and an output device, and a wired or wireless BUS connecting them, and software that is stored in the storage device and supplies a processing instruction to a computing unit (processor).

### (Functional block example of verifier 600)

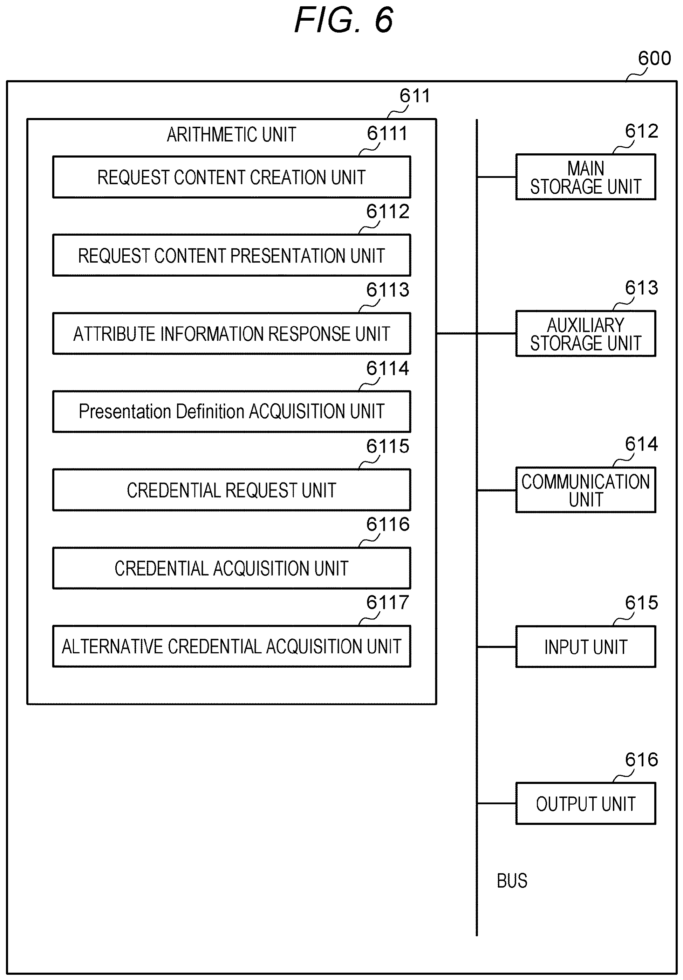

Fig. 6 is a diagram illustrating an example of blocks of various functions included in the verifier 600.

In the present embodiment, the verifier 600 mainly includes functional blocks of an arithmetic unit 611 realized by a processor (not illustrated), a main storage unit 612 realized by a memory (not illustrated), an auxiliary storage unit 613 realized by a storage (not illustrated), a communication unit 614 realized by a communication device (not illustrated), and a user interface unit including an input unit 615 realized by an input device (not illustrated) and an output unit 616 realized by an output device (not illustrated). Note that, in the following description, the main storage unit 612 and the auxiliary storage unit 613 may be collectively referred to as a storage unit (612, 613).

The arithmetic unit 611 executes various types of data processing on the basis of a program or data stored in the storage unit (612, 613) and/or data acquired by the communication unit 614. In addition, the arithmetic unit 611 also functions as an interface of the storage unit (612, 613) and the communication unit 614.

The arithmetic unit 611 includes at least functional blocks of a request content creation unit 6111, a request content presentation unit 6112, an attribute information response unit 6113, a presentation definition acquisition unit 6114, a credential request unit 6115, and a credential acquisition unit 6116.

The request content creation unit 6111 executes at least processing related to creating request content (to be described in detail later with reference to Fig. 14).

The request content presentation unit 6112 executes at least processing related to presenting request content (to be described in detail later with reference to Fig. 14).

The attribute information response unit 6113 executes at least processing related to responding to attribute information (to be described in detail later with reference to Fig. 14).

The presentation definition acquisition unit 6114 executes at least processing related to acquiring a presentation definition (to be described in detail later with reference to Fig. 21).

The credential request unit 6115 executes at least processing related to requesting a credential (to be described in detail later with reference to Fig. 21).

The credential acquisition unit 6116 executes at least processing related to acquiring a credential (to be described in detail later with reference to Fig. 21).

In addition, the arithmetic unit 611 may further include an alternative credential acquisition unit 6117 as a functional block.

The alternative credential acquisition unit 6117 executes at least processing related to acquiring an alternative credential (to be described in detail later with reference to the drawings).

The arithmetic unit 611 is configured using a processor that is an arithmetic device, and can realize these functional blocks by executing corresponding programs. Note that the arithmetic unit 611 may be configured using a logic circuit such as a field-programmable gate array (FPGA) or an application specific integrated circuit (ASIC), for example, instead of the processor. In addition, for example, the arithmetic unit 611 may be configured by a combination of a processor and a logic circuit.

As described above, the storage unit (612, 613) includes the main storage unit 612 realized by the memory that is a main storage device and the auxiliary storage unit 613 realized by the storage that is an auxiliary storage device, and stores a program for supplying various processing instructions to the arithmetic unit 611 and data representing various types of information used in processing executed by the arithmetic unit 611.

The arithmetic unit 611 can execute various types of processing to be described later by reading and writing such programs and data in the storage unit (612, 613).

The communication unit 614 is in charge of communication processing with the credential adjustment system 100 and various other external devices performed via the Internet (an example of the network 50). The communication unit 614 is configured using, for example, a network interface card (NIC), a host bus adapter (HBA), or the like.

The user interface unit (not illustrated) includes functional blocks of the input unit 615 and the output unit 616.

The input unit 615 is in charge of processing related to input, such as reception of an input operation from the user, among processing related to the user interface. The input unit 615 includes, for example, various input devices such as a touch panel, a keyboard, a mouse, and a controller, and detects various operations performed by the user.

The output unit 616 is in charge of processing related to output, such as display of various screens and voice output, among the processing related to the user interface. The output unit 616 is configured, for example, using various output devices including a display device such as a touch screen or a liquid crystal display.

Note that, for example, in a case where remote login is performed to the verifier 600 from another terminal such as a tablet, a smartphone, or a laptop PC, or in a case where input information from another terminal is received or output information is provided to another terminal via a communication device, mounting of the input unit 615 and/or the output unit 616 is not essential. In this case, the verifier 600 may have a function of a web server to accept access using a predetermined protocol from the another terminal.

That is, each component of the verifier 600 is realized by cooperation of hardware including a processor that is an arithmetic device, a storage device such as a memory that is a main storage device and a storage that is an auxiliary storage device, an interface device such as a communication device, an input device, and an output device, and a wired or wireless BUS connecting them, and software that is stored in the storage device and supplies a processing instruction to a computing unit (processor).

### (Functional block example of other external device)

In the present embodiment, among various external devices described above, the data server that stores the credential search database 700 and the credential format database 800, the request content analysis system 900, and the user terminal include functional blocks of a control unit, a storage unit, and a communication unit, and a user interface unit including an input unit and an output unit.

The control unit executes various types of data processing on the basis of a program and data stored in the storage unit and/or data acquired by the communication unit. In addition, the control unit also functions as an interface for the storage unit and the communication unit.

The control unit is configured using a processor that is a control device, and can realize each functional block by executing a corresponding program. Note that the control unit may be configured using a logic circuit such as a field-programmable gate array (FPGA) or an application specific integrated circuit (ASIC), for example, instead of the processor. In addition, for example, the control unit may be configured by a combination of a processor and a logic circuit.

The storage unit includes, for example, a main storage unit realized by a memory that is a main storage device and an auxiliary storage unit realized by a storage that is an auxiliary storage device, and stores a program for supplying various processing instructions to the control unit and data representing various types of information used in processing executed by the control unit.

The control unit can execute various types of processing by reading and writing such programs and data in the storage unit.

The communication unit is in charge of communication processing with the credential adjustment system 100 and various other external devices performed via the Internet (an example of the network 50). The communication unit is configured using, for example, a network interface card (NIC), a host bus adapter (HBA), or the like.

The user interface unit includes functional blocks of an input unit and an output unit.

The input unit is in charge of processing related to input, such as reception of an input operation from the user, among processing related to the user interface. The input unit includes, for example, various input devices (for example, the input device of the user terminal) such as a touch panel, a keyboard, a mouse, and a controller, and detects various operations performed by the user.

The output unit is in charge of processing related to output, such as display of various screens and voice output, among the processing related to the user interface. The output unit is configured, for example, using various output devices including a display device (for example, the display device of the user terminal) such as a touch screen or a liquid crystal display.

Note that, for example, in a case where remote login is performed from another terminal such as a tablet, a smartphone, a laptop PC, or the like to various external devices such as the data server that stores the credential search database 700 and the credential format database 800, and the request content analysis system 900, or in a case where input information from another terminal is received or output information is provided to another terminal via a communication device, mounting of an input unit and/or an output unit to these external devices is not essential. In this case, these external devices may have a function of a web server to accept access using a predetermined protocol from the another terminal.

That is, each component of the external device such as the data server that stores the credential search database 700 and the credential format database 800, the request content analysis system 900, and the user terminal described above is realized by cooperation of hardware including a processor that is an arithmetic device, a storage device such as a memory that is a main storage device and a storage that is an auxiliary storage device, an interface device such as a communication device, an input device (for example, the input device of the user terminal), and an output device (for example, the display device of the user terminal), and a wired or wireless BUS that connects them, and software that is stored in the storage device and supplies a processing instruction to a computing unit (processor).

The above description regarding the functions of external devices such as the issuer 400, the holder 500, the verifier 600, the data server that stores the credential search database 700 and the credential format database 800, the request content analysis system 900, and the user terminal described above has been made on the assumption that the functions of each of these external devices are integrally realized by one computer. However, each of these functions may be realized by a plurality of computers and/or servers connected to each other. In addition, these external devices may be configured to include a general-purpose computer such as a laptop PC and a web browser installed therein, or may be configured to include various portable apparatuses.

In addition, each functional unit included in these external devices may operate on a separate physical or logical computer, or a plurality of functional units may be combined and operate on one physical or logical computer.

In addition, the above description of each function is an example, and a plurality of functions may be integrated into one function, or one function may be divided into a plurality of functions.

In addition, these external devices may further include other functions in addition to the above functions.

### <Operation example of system>

Next, an operation example of the credential adjustment system 100 according to the present embodiment will be described with reference to Figs. 7 to 23.

### (Operation example of entire system)

Fig. 7 is a diagram schematically illustrating a flow of various types of data processing executed by the credential adjustment system 100.

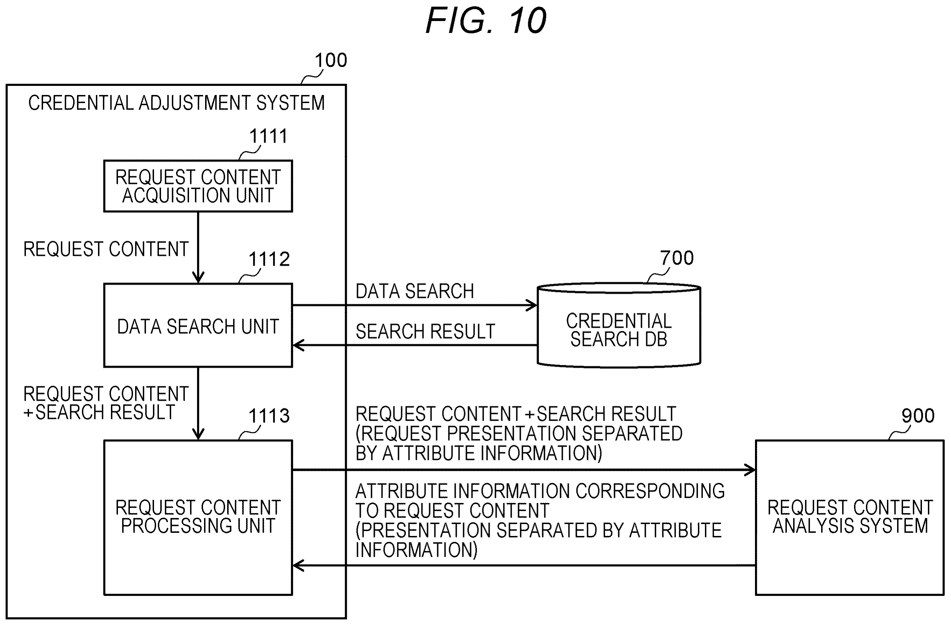

As illustrated in Fig. 7 (and Fig. 10), the credential adjustment system 100 according to the present embodiment is a computer system that, by schematically executing processing (hereinafter, also referred to as "credential registration processing") for registering a credential described later with reference to Figs. 12 and 13, processing (hereinafter, also referred to as "attribute information candidate presentation processing") for presenting attribute information candidates described later with reference to Figs. 14 and 20, and processing (hereinafter, also referred to as "presentation definition creation processing") for creating a presentation definition described later with reference to Fig. 21, presents attribute information necessary for authorization on the basis of a service authorization requirement of a verifier holding the verifier 600 and creates a request for requesting a digital certificate from a holder possessing the holder 500, thereby implementing a reduction in load on the verifier during credential matching. For this purpose, the credential adjustment system 100 analyzes request content and creates a presentation definition.

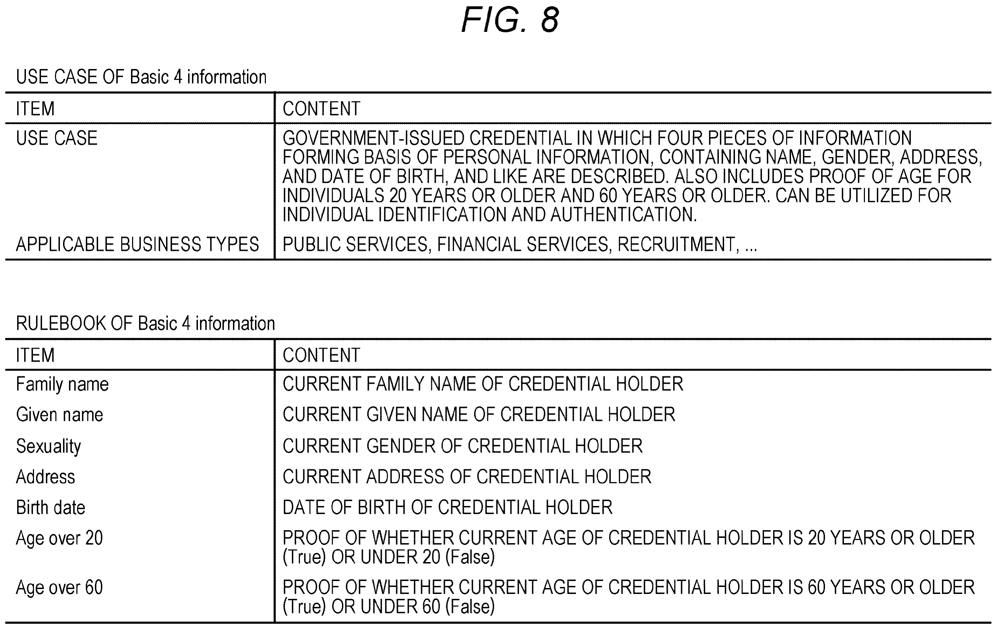

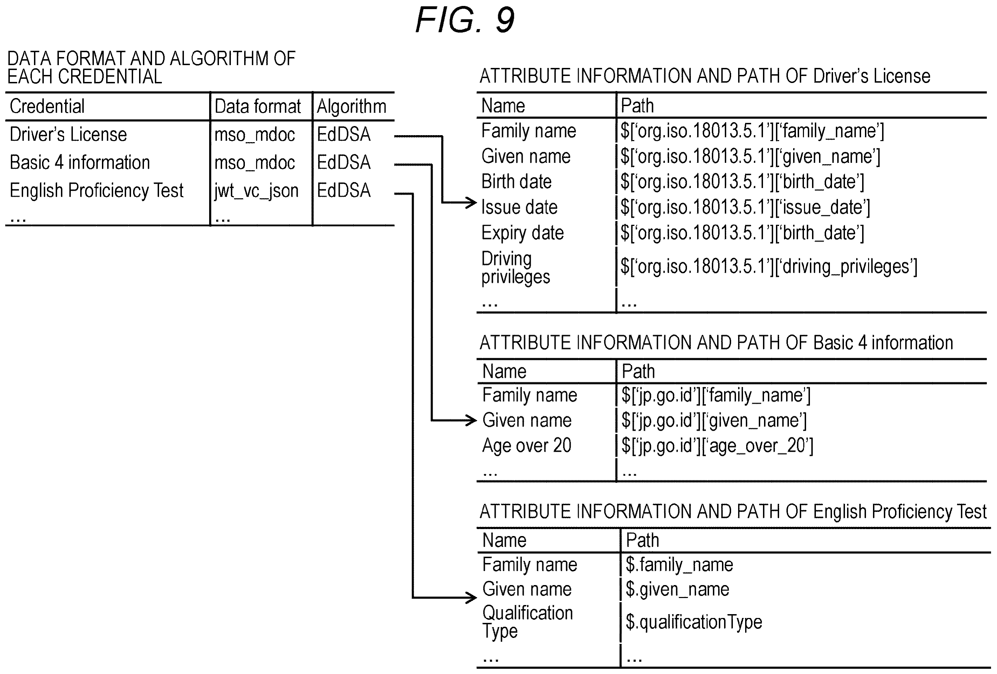

The credential adjustment system 100 performs the above-described processing using the information registered in the credential search database 700 illustrated in Fig. 8 and the information registered in the credential format database 800 illustrated in Fig. 9.

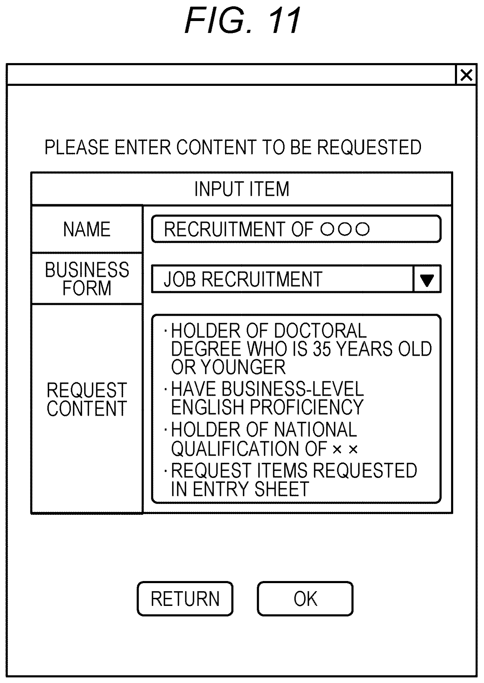

In addition, the processing mainly executed by the credential adjustment system 100 in the attribute information candidate presentation processing described above is, as illustrated in Fig. 10, acquisition processing of the request content by the request content acquisition unit 1111, data search processing for the credential search database 700 by the data search unit 1112, and processing for the request content performed by the request content processing unit 1113 in cooperation with the request content analysis system 900. Among them, the processing of receiving the request content by the request content acquisition unit 1111 is performed by receiving an input operation of the user on the GUI display screen illustrated in Fig. 11.

### (Credential registration processing)

Figs. 12 and 13 are sequence diagrams illustrating a flow of the credential registration processing. Among these, the sequence diagram illustrated in Fig. 12 illustrates an example of the flow of the credential registration processing executed in a case where the issuer 400 that has issued a credential registers information regarding the credential in the credential search database 700 and the credential format database 800 by itself. On the other hand, the sequence diagram illustrated in Fig. 13 illustrates an example of the flow of the credential registration processing executing in a case where the information regarding the credential is created in the credential adjustment system 100 from information published as the specification.

### (When issuer 400 registers by itself)

In the credential registration processing illustrated in the sequence diagram of Fig. 12, the issuer 400 registers the information regarding the credential issued by itself in the credential search database 700 and the credential format database 800 by itself.

Note that the credential adjustment system 100 is not significantly involved in the credential registration processing in this case, and thus is not illustrated in the sequence diagram illustrated in Fig. 12.

In step S1201, the arithmetic unit 411 of the issuer 400 executes processing of the use case registration unit 4111 indexing use case information and registering the indexed information in the credential search database 700. Accordingly, the indexed use case information is registered in the credential search database 700. When the processing in step S1201 is completed, the arithmetic unit 411 of the issuer 400 proceeds to step S1202.

In step S1202, the arithmetic unit 411 of the issuer 400 executes processing of the rulebook registration unit 4112 indexing rulebook information and registering the indexed information in the credential search database 700. This causes the indexed rulebook information to be registered in the credential search database 700. When the processing in step S1202 is completed, the arithmetic unit 411 of the issuer 400 proceeds to step S1203.

In step S1203, the arithmetic unit 411 of the issuer 400 executes processing of the credential format registration unit 4113 registering the format of the credential in the credential format database 800. Specifically, this processing is performed by registering information described in the presentation definition for each credential as information indicating the format of the credential in the credential format database 800. Accordingly, the format of the credential is registered in the credential format database 800. When the processing in step S1203 is completed, the arithmetic unit 411 of the issuer 400 ends the credential registration processing illustrated in the sequence diagram of Fig. 12.

### (When created by credential adjustment system 100)

On the other hand, in the credential registration processing illustrated in the sequence diagram of Fig. 13, the information regarding the credential is created in the credential adjustment system 100 from the information disclosed as the specification.

In step S1301, the arithmetic unit 111 of the credential adjustment system 100 executes processing of the use case acquisition unit 1118 acquiring the use case information from the database (hereinafter, also referred to as an "issuer database" or an "issuer DB") 1300 of the issuer 400. Accordingly, the use case information is acquired from the issuer database 1300. When the processing in step S1301 is completed, the arithmetic unit 111 of the credential adjustment system 100 proceeds to step S1302.

In step S1302, the arithmetic unit 111 of the credential adjustment system 100 executes processing of the rulebook acquisition unit 1119 acquiring the rulebook information from the issuer database 1300. Accordingly, the rulebook information is acquired from the issuer database 1300. When the processing in step S1302 is completed, the arithmetic unit 111 of the credential adjustment system 100 proceeds to step S1303.

In step S1303, the arithmetic unit 111 of the credential adjustment system 100 executes processing of the credential format acquisition unit 1120 acquiring information described in the presentation definition for each credential from the issuer database 1300. Accordingly, the information described in the presentation definition for each credential is acquired from the issuer database 1300. When the processing in step S1303 is completed, the arithmetic unit 111 of the credential adjustment system 100 proceeds to step S1304.

In step S1304, the arithmetic unit 111 of the credential adjustment system 100 executes processing of the credential search database registration unit 1121 indexing each of the use case information acquired in step S1301 and the rulebook information acquired in step S1302 and registering the indexed information in the credential search database 700. Accordingly, the indexed use case information and rulebook information are registered in the credential search database 700. When the processing in step S1304 is completed, the arithmetic unit 111 of the credential adjustment system 100 proceeds to step S1305.

In step S1305, the arithmetic unit 111 of the credential adjustment system 100 executes processing of the credential format database registration unit 1122 registering the format of the credential in the credential format database 800. Specifically, this processing is performed by registering, as information indicating the format of the credential, information described in the presentation definition for each credential acquired in step S1303 in the credential format database 800. Accordingly, the format of the credential is registered in the credential format database 800. When the processing in step S1305 is completed, the arithmetic unit 111 of the credential adjustment system 100 ends the credential registration processing illustrated in the sequence diagram of Fig. 13.

As described above, in the credential registration processing illustrated in the sequence diagram of Fig. 13, as described above, the use case information and the rulebook information published as specifications in the issuer database 1300 are acquired (steps S1301 to S1302 of Fig. 13), indexed by the credential adjustment system 100, and registered in the credential search database 700 (step S1304 of Fig. 13). In addition, information described in the presentation definition for each credential published as the specification in the issuer database 1300 is acquired (step S1303 in Fig. 13), and the format of the credential is registered in the credential format database 800 by using the information (step S1305 in Fig. 13). By executing the credential registration processing by such a procedure, the credential adjustment system 100 can reduce the time and effort of the issuer 400.

### (Attribute information candidate presentation processing)

Figs. 14 and 20 are sequence diagrams illustrating a flow of the attribute information candidate presentation processing. Among these, the sequence diagram illustrated in Fig. 14 mainly illustrates an example of a flow of attribute information candidate presentation processing executed in a case where there is a credential that satisfies the request, together with an example of the attribute verification processing. On the other hand, the sequence diagram illustrated in Fig. 20 illustrates an example of a flow of attribute information candidate presentation processing executed in a case where there is no credential that satisfies the request.

### (When there is credential satisfying request)

As described above, Fig. 14 is a sequence diagram illustrating an example of the attribute information candidate presentation processing (steps S1401 to S1405 in Fig. 14) executed in a case where there is a credential that satisfies the request, together with an example of the attribute verification processing (steps S1406 to S1408 in Fig. 14).

In step S1401, the arithmetic unit 611 of the verifier 600 executes processing of the request content creation unit 6111 creating the request content. Accordingly, the request content is created. When the processing in step S1401 is completed, the arithmetic unit 611 of the verifier 600 proceeds to step S1402.

In step S1402, the arithmetic unit 611 of the verifier 600 executes processing of the request content presentation unit 6112 presenting the request content created in step S1401 to the credential adjustment system 100. Accordingly, the request content is presented to the credential adjustment system 100.

In step S1403, the arithmetic unit 111 of the credential adjustment system 100 executes processing of the request content acquisition unit 1111 acquiring the request content presented by the verifier 600 in step S1402. Accordingly, the request content is acquired from the verifier 600. When the processing in step S1403 is completed, the arithmetic unit 111 of the credential adjustment system 100 proceeds to step S1404.

In step S1404, the arithmetic unit 111 of the credential adjustment system 100 executes data search processing of the data search unit 1112 performing data search on the data stored in the credential search database 700 in order to determine necessary attribute information according to the request content acquired in step S1403. Accordingly, a result of the data search processing is obtained. When the processing in step S1404 is completed, the arithmetic unit 111 of the credential adjustment system 100 proceeds to step S1405.

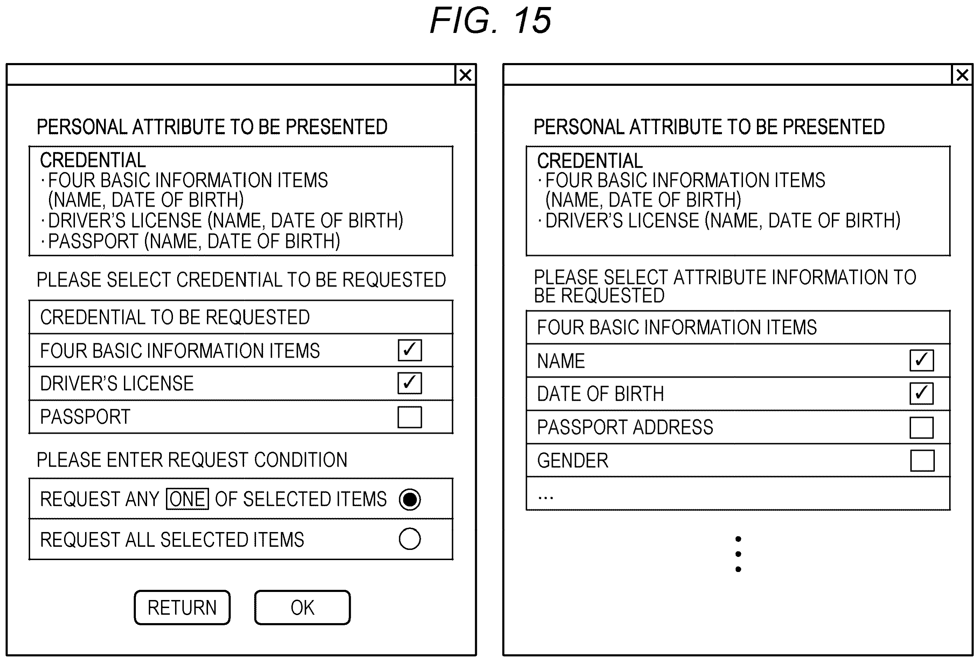

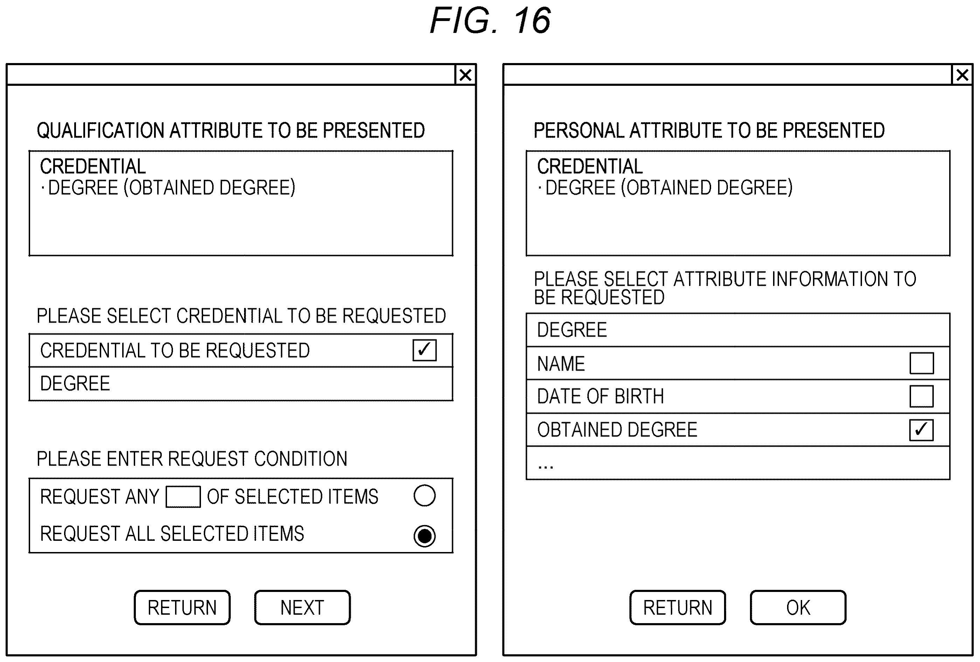

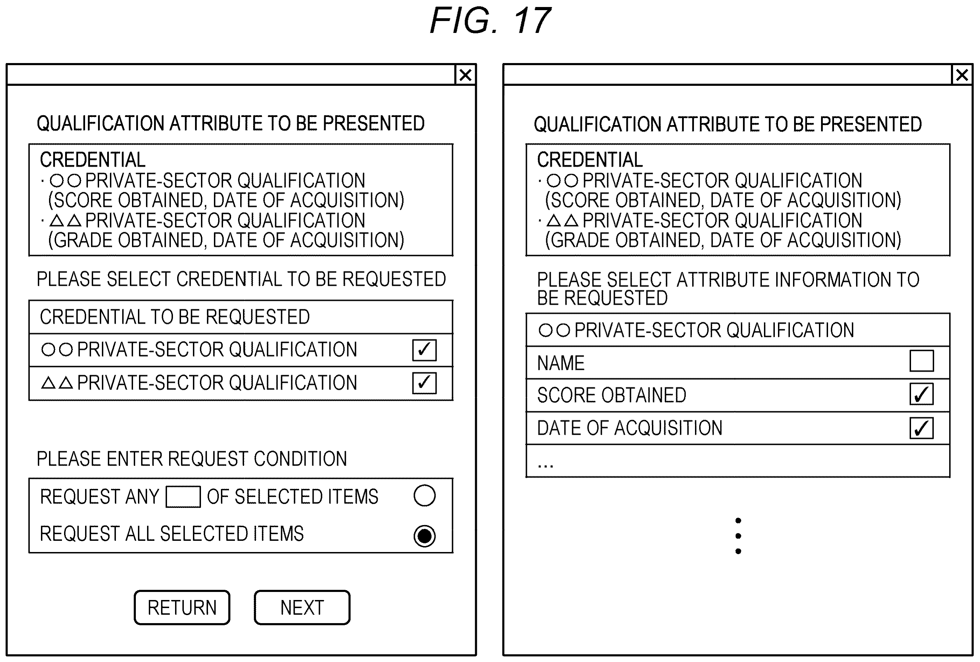

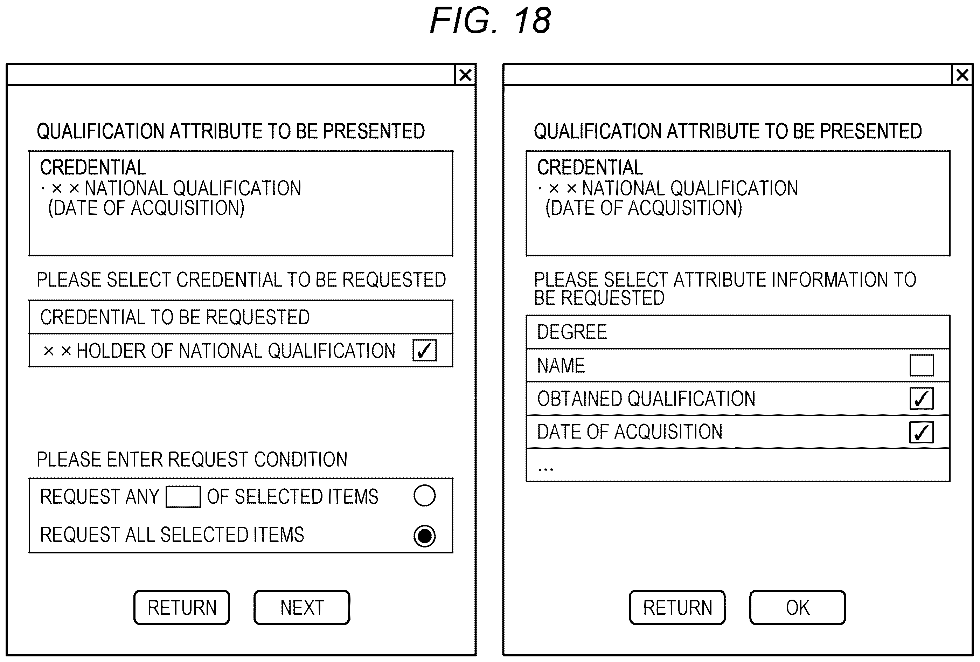

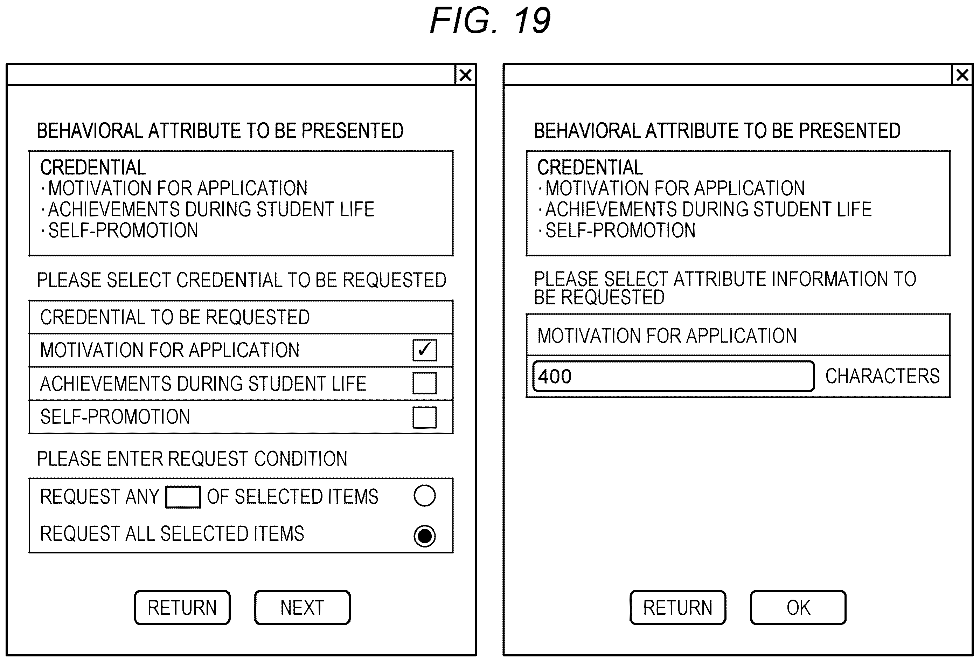

In step S1405, the arithmetic unit 111 of the credential adjustment system 100 executes processing of the request content processing unit 1113 requesting the request content analysis system 900 to present necessary attribute information separated by attribute information, by using the request content acquired in step S1403 and the data search result obtained in step S1404. Note that the request content analysis system 900 may perform processing of storing a large-scale language model that is a large-scale learned model trained through machine learning using natural language data, inputting the request content acquired in step S1403 and the data search result obtained in step S1404 as a prompt to the large-scale language model, and generating a candidate for attribute information corresponding to the input content. When a prompt described in a natural language is provided as an input, the large-scale language model outputs information (sentence, program code, or the like) described in the natural language generated according to the above prompt. The arithmetic unit of the request content analysis system 900 that has received the request from the credential adjustment system 100 regarding the necessary attribute information executes processing of presenting the attribute information to the credential adjustment system 100. The request for the attribute information to the request content analysis system 900 is made based on, for example, the content of the input operation received via the GUI display screen illustrated in Figs. 15 to 19. Fig. 15 illustrates an example of the GUI display screen in a case where the target attributes targeted by a request to the request content analysis system 900, in other words, the attributes presented from the request content analysis system 900 are personal attributes such as four basic information items, a driver's license, or a passport. Similarly, Fig. 16 illustrates an example of the GUI display screen in a case where the target attribute of the request is an obtained degree, Fig. 17 illustrates an example of the GUI display screen in a case where the target attribute of the request is a private-sector qualification, Fig. 18 illustrates an example of the GUI display screen in a case where the target attribute of the request is a national qualification, and Fig. 19 illustrates an example of the GUI display screen in a case where the target attribute of the request is a behavioral attribute such as motivation for application, achievements during student life, or self-promotion. In the GUI display screen illustrated in Figs. 15 to 19, when the user presses an "OK" button after a necessary input operation is performed on the display screen illustrated on the left side, transition is made to the display screen illustrated on the right side, and the user continues to perform the necessary input operation. In this manner, the user's input operation regarding necessary information is performed. Accordingly, the attribute information matching the content of the request is presented from the request content analysis system 900. When the processing in step S1405 is completed, the arithmetic unit 111 of the credential adjustment system 100 proceeds to step S1406.

In step S1406, the arithmetic unit 111 of the credential adjustment system 100 executes processing of the attribute information verification unit 1114 causing the verifier 600 to verify the content of the attribute information presented from the request content analysis system 900 in step S1405. Accordingly, the content of the attribute information is verified by the verifier 600.

In step S1407, the arithmetic unit 611 of the verifier 600 executes processing of the attribute information response unit 6113 responding to the verified attribute information from the credential adjustment system 100 in step S1406. Accordingly, a response to the attribute information is made to the credential adjustment system 100.

In step S1408, the arithmetic unit 111 of the credential adjustment system 100 executes processing of the condition processing unit 1115 performing condition processing on the basis of the content of the response made by the verifier 600 in step S1407. Accordingly, the condition processing is performed. When the processing in step S1408 is completed, the arithmetic unit 111 of the credential adjustment system 100 ends the attribute information candidate presentation processing illustrated in the sequence diagram of Fig. 14.

### (When there is no credential satisfying request)

On the other hand, in a case where there is no credential that satisfies the request, the attribute information candidate presentation processing illustrated in the sequence diagram of Fig. 20 can be executed.

In step S2001, the arithmetic unit 611 of the verifier 600 executes processing of the credential request unit 6115 requesting a credential from the holder 500. Accordingly, the credential is requested from the holder 500.

In step S2002, the arithmetic unit 511 of the holder 500 executes processing of the credential request acceptance unit 5113 accepting the credential request from the verifier 600 performed in step S2001. Accordingly, the credential request is accepted. When the processing in step S2002 is completed, the arithmetic unit 511 of the holder 500 proceeds to step S2003.

In step S2003, the arithmetic unit 511 of the holder 500 executes processing of the credential request determination unit 5114 determining, for the content of the credential request received from the verifier 600 in step S2002, whether or not there is a credential that satisfies the request, whether or not the request content can be satisfied with an alternative credential in a case where there is no credential that satisfies the request, and the like. Accordingly, these determinations are made on the request content. When the processing in step S2003 is completed, the arithmetic unit 511 of the holder 500 proceeds to step S2004.

In step S2004, the arithmetic unit 511 of the holder 500 performs processing of the alternative credential presentation unit 5117 presenting, to the verifier 600, the fact that the credential that satisfies the content of the credential request accepted in step S2002 is not held, and a credential with alternative possibility (hereinafter, also referred to as "alternative credential") on the basis of the result of the determination performed in step S1403. Accordingly, an alternative credential is presented to the verifier 600.

In step S2005, the arithmetic unit 611 of the verifier 600 executes processing of the alternative credential acquisition unit 6117 acquiring the alternative credential presented from the holder 500 in step S2004. Accordingly, the alternative credential is acquired. When the processing in step S2005 is completed, the arithmetic unit 611 of the verifier 600 proceeds to step S2006.

In step S2006, the arithmetic unit 611 of the verifier 600 executes processing of the request content creation unit 6111 creating request content on the basis of the content of the alternative credential acquired in step S2005. Accordingly, the request content is created. When the processing in step S2006 is completed, the arithmetic unit 611 of the verifier 600 proceeds to step S2007.

In step S2007, the arithmetic unit 611 of the verifier 600 executes processing of the request content presentation unit 6112 presenting the request content created in step S2006 to the credential adjustment system 100. Accordingly, the request content is presented to the credential adjustment system 100.

In step S2008, the arithmetic unit 111 of the credential adjustment system 100 executes processing of the request content acquisition unit 1111 acquiring the request content presented from the verifier 600 in step S2007. Accordingly, the request content is acquired. When the processing in step S2008 is completed, the arithmetic unit 111 of the credential adjustment system 100 proceeds to step S2009.

In step S2009, the arithmetic unit 111 of the credential adjustment system 100 executes processing of the data search unit 1112 searching for data. Accordingly, the data is retrieved. When the processing in step S2009 is completed, the arithmetic unit 111 of the credential adjustment system 100 proceeds to step S2010.

In step S2010, the arithmetic unit 111 of the credential adjustment system 100 executes processing of the request content processing unit 1113 processing the request content acquired in step S2008. Accordingly, the request content is processed. When the processing in step S2010 is completed, the arithmetic unit 111 of the credential adjustment system 100 ends the attribute information candidate presentation processing illustrated in the sequence diagram of Fig. 20.

As described above, in the present embodiment, as illustrated in the sequence diagram of Fig. 20, even in a case where there is no credential that satisfies the request, by presenting the alternative credential to the verifier 600, the attribute information candidate presentation processing (and the attribute verification processing) can be executed as in a case where there is a credential that satisfies the request.

### (Presentation definition creation processing)

Fig. 21 is a sequence diagram illustrating an example of the presentation definition creation processing.

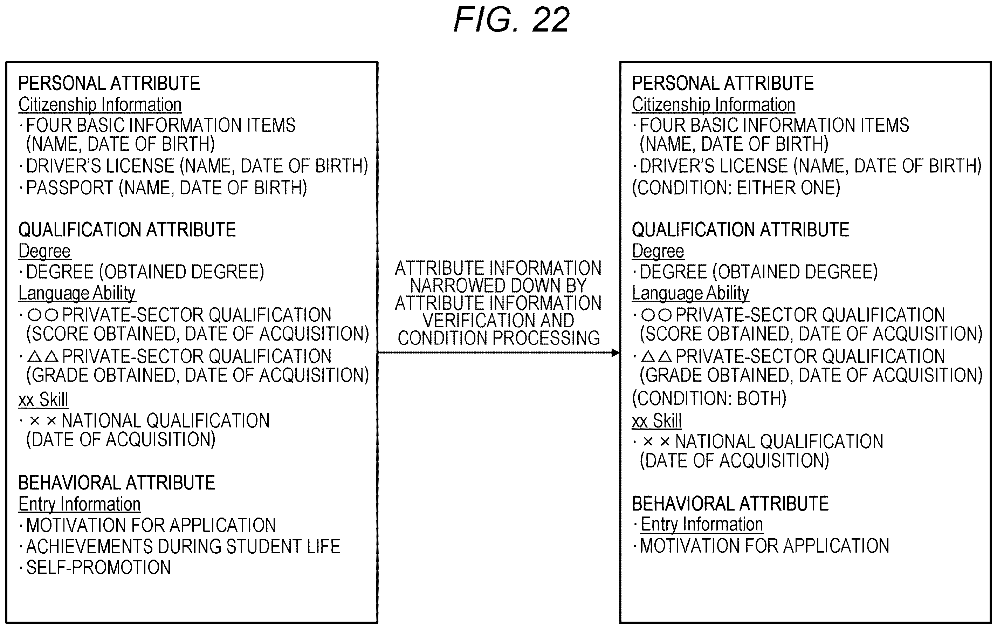

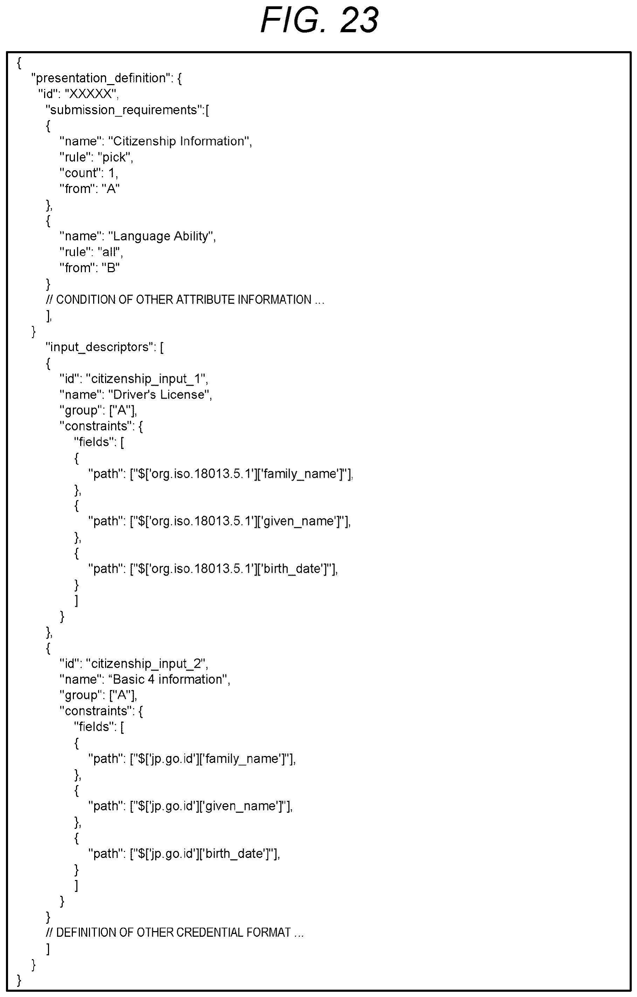

In step S2101, the arithmetic unit 111 of the credential adjustment system 100 executes processing of the presentation definition creation unit 1116 creating a presentation definition. This processing is performed by verifying, with the credential format database 800, the format and the path of the organized attribute information illustrated in Fig. 22 and creating a presentation definition on the basis of the verification content. Accordingly, the presentation definition is created as illustrated in Fig. 23. When the processing in step S2101 is completed, the arithmetic unit 111 of the credential adjustment system 100 proceeds to step S2102.

In step S2102, the arithmetic unit 111 of the credential adjustment system 100 executes processing of the presentation definition presentation unit 1117 presenting, to the verifier 600, the presentation definition created in step S2101. Accordingly, the presentation definition is presented to the verifier 600.

In step S2103, the arithmetic unit 611 of the verifier 600 executes processing of the presentation definition acquisition unit 6114 acquiring the presentation definition presented from the credential adjustment system 100 in step S2102. Accordingly, the presentation definition is acquired in the verifier 600. When the processing in step S2103 is completed, the arithmetic unit 611 of the verifier 600 proceeds to step S2104.

In step S2104, the arithmetic unit 611 of the verifier 600 executes processing of the credential request unit 6115 requesting a credential on the basis of the presentation definition acquired in step S2103. Accordingly, the presentation definition is presented to the verifier 600.

In step S2105, the arithmetic unit 511 of the holder 500 executes processing of the credential request acceptance unit 5113 accepting the credential request performed by the verifier 600 in step S2104. Accordingly, the credential request is accepted in the holder 500. When the processing in step S2105 is completed, the arithmetic unit 511 of the holder 500 proceeds to step S2106.

In step S2106, the arithmetic unit 511 of the holder 500 executes processing of the credential request determination unit 5114 determining the credential request accepted from the verifier 600 in step S2105. Accordingly, a determination is made on the credential request. When the processing in step S2106 is completed, the arithmetic unit 511 of the holder 500 proceeds to step S2107.

In step S2107, the arithmetic unit 511 of the holder 500 executes processing of the credential creation unit 5115 creating a credential on the basis of the result of the determination performed in step S2106. Accordingly, the credential is created. When the processing in step S2107 is completed, the arithmetic unit 511 of the holder 500 proceeds to step S2108.

In step S2108, the arithmetic unit 511 of the holder 500 executes processing of the credential presentation unit 5116 presenting the credential created in step S2107 to the verifier 600.

In step S2109, the arithmetic unit 611 of the verifier 600 executes processing of the credential acquisition unit 6116 acquiring the credential presented from the holder 500 in step S2105. Accordingly, the credential is acquired. When the processing in step S2109 is completed, the arithmetic unit 611 of the verifier 600 ends the presentation definition creation processing illustrated in the sequence diagram in Fig. 21.

The credential adjustment system 100 according to the present embodiment has been described above.

The embodiment of the present invention described above is summarized as follows.
(1) A credential adjustment system 100 is a system that adjusts a credential (digital certificate), including at least: a processor 101; and a storage device (102, 103), characterized in that the credential adjustment system 100 includes at least a computer that is connected to a terminal (holder 500) used by a holder of the credential and a terminal (verifier 600) used by a verifier for attribute information so as to be able to perform data communication with each other, and the processor 101 presents a candidate of attribute information necessary for authorization to a terminal (verifier 600) used by the verifier on the basis of request content presented by the terminal (verifier 600) used by the verifier for attribute information, and creates a format (presentation definition) of a request that is made by the terminal (verifier 600) used by the verifier for attribute information in order to request the credential from the terminal (holder 500) used by the holder of the credential, and presents the format to the terminal (verifier 600) used by the verifier. With this configuration, the verifier for attribute information using the credential adjustment system 100 can easily create a format (presentation definition) of a request that is made in order to request a credential from the terminal (holder 500) used by the holder of the credential, only by performing an input operation on the verifier 600 and presenting request content to the credential adjustment system 100. As a result, the credential adjustment system 100 can reduce a burden on the verifier for attribute information when requesting the credential from the holder of the credential.
(2) In presentation of the candidate of the attribute information to the terminal (verifier 600) used by the verifier for attribute information, the request content presented by the terminal (verifier 600) used by the verifier for attribute information is acquired, data search is performed on data stored in the storage device (103) in order to determine necessary attribute information according to the acquired request content, the request content analysis system 900 is requested to provide the necessary attribute information by using the acquired request content and a data search result obtained as a result of the data search, and presentation of attribute information matching content of the request is received from the request content analysis system 900, content of the attribute information presented from the request content analysis system 900 is verified by the terminal (verifier 600) used by the verifier for attribute information, and condition processing is performed on the basis of response content from the terminal (verifier 600) used by the verifier for attribute information.
(3) The data search is performed on the basis of content of an input operation in which at least a name, a business form, and request content are received as input items.
(4) The request for necessary attribute information to the request content analysis system 900 is carried out so that the information is presented separated by attribute information.
(5) A format of the request is a presentation definition.
(6) The processor 101 further performs processing of registering a credential by acquiring and indexing use case information and rulebook information and registering the information in a first database (credential search database 700), and acquiring information described in each credential in the format of the request and registering the information in a second database (credential format database 800).
(7) In the processing of registering the credential, information regarding the credential is created on the basis of information published as a specification.
(8) In the presentation of the candidate of the attribute information to the terminal (verifier 600) used by the verifier for attribute information, the terminal (holder 500) used by the holder of the credential acquires request content created by the terminal (verifier 600) used by the verifier for attribute information on the basis of an alternative credential presented to the terminal (verifier 600) used by the verifier for attribute information, data search is performed on data stored in the storage device (103) in order to determine necessary attribute information according to the acquired request content, the request content analysis system 900 is requested to determine whether the request is able to be satisfied with an alternative credential, by using the acquired request content and a data search result obtained as a result of the data search, and a result of the determination is received from the request content analysis system 900.
(9) The format of the request is created on the basis of verification content obtained by verifying, with the second database (credential format database 800), a format and a path of the attribute information.
(10) A candidate with a plurality of pieces of attribute information is presented to the terminal (verifier 600) used by the verifier for attribute information, and the format of the request is created on the basis of attribute information selected from the plurality of pieces of attribute information by the terminal (verifier 600) used by the verifier for attribute information. In this manner, the verifier utilizing the credential adjustment system 100 can request a compatible credential from the holder. As a result, the credential adjustment system 100 can further reduce the burden on the verifier for attribute information when requesting the credential from the holder of the credential.
(11) The format of the request is created according to a need of the verifier for attribute information.
(12) The presentation of the candidate of the attribute information necessary for authorization to the terminal (verifier 600) used by the verifier for attribute information includes processing using a large-scale language model.
(13) In the processing using the large-scale language model, attribute information selected by an operation on the terminal (verifier 600) used by the verifier for attribute information and/or a condition specified by the operation on the terminal (verifier 600) used by the verifier are input as a prompt to the large-scale language model, and a candidate of attribute information generated by the large-scale language model is acquired according to the attribute information and/or the condition input as the prompt and presented to the terminal (verifier 600) used by the verifier for attribute information.
(14) In the processing using the large-scale language model, as a search phase, data search is performed on the data stored in the storage device (103) in order to determine necessary attribute information according to the acquired request content, as a generation phase, the request content acquired from the terminal (verifier 600) used by the verifier for attribute information and a data search result obtained as a result of the data search are input as a prompt to the large-scale language model, and a candidate of attribute information generated by the large-scale language model is acquired according to the input content and presented to the terminal (verifier 600) used by the verifier for attribute information.

Note that the present invention is not limited to the above embodiment, and can be implemented by using any component without departing from the gist of the present invention.

The embodiments and modifications described above are merely examples, and the present invention is not limited to these contents unless the characteristics of the invention are impaired. In addition, although various embodiments and modifications have been described above, the present invention is not limited to these contents. Other embodiments considered within the scope of the technical idea of the present invention are also included within the scope of the present invention.

In each of the above drawings, the control lines and information lines indicate what is considered necessary for the explanation, and not all control lines and information lines on implementation are necessarily shown. For example, it may be considered that almost all the configurations are actually connected to each other.

In addition, the arrangement form of each functional unit of the credential adjustment system 100 described above is merely an example. The arrangement form of each functional unit can be changed to an optimal arrangement form from the viewpoint of performance, processing efficiency, communication efficiency, and the like of hardware and software included in the credential adjustment system 100.

In addition, some or all of the above-described configurations, functions, processing units, processing means, and the like may be realized with hardware by, for example, designing with an integrated circuit, or may be realized with software by the processor 101, which is an arithmetic device, interpreting and executing a program for realizing each function.

## Claims

1. A credential adjustment system (100) that adjusts a credential, comprising at least: a processor (101); and a storage device (102, 103), **characterized in that**
the credential adjustment system (100) includes at least a computer that is connected to a terminal (500) used by a holder of the credential and a terminal (600) used by a verifier for attribute information so as to be able to perform data communication with each other, and
the processor (101)
presents a candidate of attribute information necessary for authorization to a terminal (600) used by the verifier on a basis of request content presented by the terminal (600) used by the verifier for attribute information, and
creates a format of a request that is made by the terminal (600) used by the verifier for attribute information in order to request the credential from the terminal (500) used by the holder of the credential, and presents the format to the terminal (600) used by the verifier.

2. The credential adjustment system (100) according to claim 1, **characterized in that**
in presentation of the candidate of the attribute information to the terminal (600) used by the verifier for attribute information,
the request content presented by the terminal (600) used by the verifier for attribute information is acquired,
data search is performed on data stored in the storage device (103) in order to determine necessary attribute information according to the acquired request content,
the request content analysis system (900) is requested to provide the necessary attribute information by using the acquired request content and a data search result obtained as a result of the data search, and presentation of attribute information matching content of the request is received from the request content analysis system (900),
content of the attribute information presented from the request content analysis system (900) is verified by the terminal (600) used by the verifier for attribute information, and
condition processing is performed on a basis of response content from the terminal (600) used by the verifier for attribute information.

3. The credential adjustment system (100) according to claim 1 or 2, **characterized in that**
the data search is performed on a basis of content of an input operation in which at least a name, a business form, and request content are received as input items.

4. The credential adjustment system (100) according to at least one of the previous claims, **characterized in that**
the request for necessary attribute information to the request content analysis system (900) is carried out so that the information is presented separated by attribute information.

5. The credential adjustment system (100) according to at least one of the previous claims, **characterized in that**
a format of the request is a presentation definition.

6. The credential adjustment system (100) according to at least one of the previous claims, **characterized in that**
the processor (101) further performs processing of registering a credential by
acquiring and indexing use case information and rulebook information and registering the information in a first database (credential search database 700), and
acquiring information described in each credential in the format of the request and registering the information in a second database (credential format database 800).

7. The credential adjustment system (100) according to claim 6, **characterized in that**
in the processing of registering the credential, information regarding the credential is created on a basis of information published as a specification.

8. The credential adjustment system (100) according to at least one of the previous claims, **characterized in that**
in the presentation of the candidate of the attribute information to the terminal (600) used by the verifier for attribute information,
the terminal (500) used by the holder of the credential acquires request content created by the terminal (600) used by the verifier for attribute information on a basis of an alternative credential presented to the terminal (600) used by the verifier for attribute information,
data search is performed on data stored in the storage device (103) in order to determine necessary attribute information according to the acquired request content,
the request content analysis system (900) is requested to determine whether the request is able to be satisfied with an alternative credential, by using the acquired request content and a data search result obtained as a result of the data search, and
a result of the determination is received from the request content analysis system (900).

9. The credential adjustment system (100) according to claim 6, **characterized in that**
the format of the request is created on a basis of verification content obtained by verifying, with the second database (800), a format and a path of the attribute information.

10. The credential adjustment system (100) according to at least one of the previous claims, **characterized in that**
a candidate with a plurality of pieces of attribute information is presented to the terminal (600) used by the verifier for attribute information, and
the format of the request is created on a basis of attribute information selected from the plurality of pieces of attribute information by the terminal (600) used by the verifier for attribute information.

11. The credential adjustment system (100) according to claim 10, **characterized in that**
the format of the request is created according to a need of the verifier for attribute information.

12. The credential adjustment system (100) according to at least one of the previous claims, **characterized in that**
the presentation of the candidate of the attribute information necessary for authorization to the terminal (600) used by the verifier for attribute information includes processing using a large-scale language model.

13. The credential adjustment system (100) according to at least one of the previous claims, **characterized in that**
attribute information selected by an operation on the terminal (600) used by the verifier for attribute information and/or a condition specified by the operation on the terminal (600) used by the verifier are input as a prompt to the large-scale language model, and
a candidate of attribute information generated by the large-scale language model is acquired according to the attribute information and/or the condition input as the prompt and presented to the terminal (600) used by the verifier for attribute information.

14. The credential adjustment system (100) according to at least one of the previous claims, **characterized in that**
data search is performed on the data stored in the storage device (103) in order to determine necessary attribute information according to the acquired request content,
the request content acquired from the terminal (600) used by the verifier for attribute information and a data search result obtained as a result of the data search are input as a prompt to the large-scale language model, and
a candidate of attribute information generated by the large-scale language model is acquired according to the input content and presented to the terminal (600) used by the verifier for attribute information.

15. A credential adjustment method that adjusts a credential, **characterized in that**
at least a processor (101) and a storage device (102, 103) are included, and
in a computer that is connected to a terminal (500) used by a holder of the credential and a terminal (600) used by a verifier for attribute information so as to be able to perform data communication with each other,
the processor (101)
presents a candidate of attribute information necessary for authorization to a terminal (600) used by the verifier on a basis of request content presented by the terminal (600) used by the verifier for attribute information, and
creates a format of a request that is made by the terminal (600) used by the verifier for attribute information in order to request the credential from the terminal (500) used by the holder of the credential, and presents the format to the terminal (600) used by the verifier.
